(19)

Europäisches
Patentamt
European
Patent Office
Office européen
des brevets

(11) **EP 3 096 446 A1**

(12) **EUROPEAN PATENT APPLICATION**

(43) Date of publication:
**23.11.2016 Bulletin 2016/47**

(21) Application number: **15275141.8**

(22) Date of filing: **22.05.2015**

(51) Int Cl.:
***H02M 7/483*** (2007.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **General Electric Technology GmbH
5400 Baden (CH)**

(72) Inventors:
 • **JASIM, Omar Fadhel
 Wollaton
 Nottingham, NG8 2RW (GB)**

 • **TRAINER, David Reginald
 Alvaston
 Derby. DE24 0AQ (GB)**

(74) Representative: **Cleary, Fidelma et al
 Global Patent Operation - Europe
 GE International Inc.
 The Ark
 201 Talgarth Road
 Hammersmith
 London W6 8BJ (GB)**

(54) **A METHOD OF CONTROLLING A CONVERTER**

(57)      There is a method of controlling a converter comprising first and second DC terminals for connection to a DC network, the converter including at least one limb connected between the first and second DC terminals, the or each limb including:

a phase element having a plurality of switching elements and at least one AC terminal for connection to an AC network, the plurality of switching elements being configured to be switchable to selectively interconnect a DC side voltage at a DC side of the phase element and an AC side voltage at an AC side of the phase element;
a first sub-converter connected in series with the DC side of the phase element in an electrical block, the first sub-converter being configured to be controllable to act as a first voltage source; and
a second sub-converter connected in parallel with the electrical block, the second sub-converter being configured to be controllable to act as a second voltage source.

The method includes the steps of:
(a) obtaining a respective DC side voltage demand (HB_A, HB_B, HB_C) for the DC side voltage which the corresponding limb is required to track, and a DC converter voltage demand (Vdc) for the DC converter voltage across the first and second DC terminals which the converter is required to track;
(b) determining a sub-converter voltage for each sub-converter that the sub-converter must contribute to track the corresponding required DC side voltage and DC converter voltage demands (HB_A, HB_B, HB_C, Vdc);
(c) controlling each sub-converter as the respective voltage source to achieve the corresponding determined sub-converter voltage; and
(d) carrying out mathematical optimization to determine one or more optimal sub-converter voltages.

Figure 5

**Description**

This invention relates to a method of controlling a converter and to such a converter.

In high voltage direct current (HVDC) power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion; AC to DC or DC to AC.

According to a first aspect of the invention, there is provided a method of controlling a converter comprising first and second DC terminals for connection to a DC network, the converter including at least one limb connected between the first and second DC terminals, the or each limb including:

a phase element having a plurality of switching elements and at least one AC terminal for connection to an AC network, the plurality of switching elements being configured to be switchable to selectively interconnect a DC side voltage at a DC side of the phase element and an AC side voltage at an AC side of the phase element;

a first sub-converter connected in series with the DC side of the phase element in an electrical block, the first sub-converter being configured to be controllable to act as a first voltage source; and

a second sub-converter connected in parallel with the electrical block, the second sub-converter being configured to be controllable to act as a second voltage source,

wherein the method includes the steps of:

(a) obtaining a respective DC side voltage demand for the DC side voltage which the corresponding limb is required to track, and a DC converter voltage demand for the DC converter voltage across the first and second DC terminals which the converter is required to track;

(b) determining a sub-converter voltage for each sub-converter that the sub-converter must contribute to track the corresponding required DC side voltage and DC converter voltage demands;

(c) controlling each sub-converter as the respective voltage source to achieve the corresponding determined sub-converter voltage; and

(d) carrying out mathematical optimization to determine one or more optimal sub-converter voltages.

Carrying out the aforementioned mathematical optimization step, i.e. selecting the best sub-converter voltages (with regard to chosen criteria or constraints) from a set of available alternatives, allows the instantaneous calculation of the optimal sub-converter voltages to meet a number of criteria or constraints designed to maintain the operation of the converter within its nominal voltage and current rating whilst meeting specified AC and DC side power quality requirements.

In addition the method of the invention also permits variations in the performance of the or each limb to be readily accommodated while operation of the converter as a whole continues under abnormal conditions or when the converter experiences a dynamic change in normal operating conditions. Such variations in the performance of the or each limb is particularly advantageous when it comes to the operation of the converter under abnormal operating conditions that could lead to a lack of sufficient information about the voltage conditions of the converter and thereby result in unreliable operation of the converter.

The method of the invention may be extended to further topologies of the converter.

In embodiments of the invention, the or each limb may further include a third sub-converter connected in series with the corresponding first sub-converter, the or each third sub-converter is configured to be controllable to act as a third voltage source, and the or each second sub-converter is connected to a common connection point between the corresponding first and third sub-converters to form a "T" arrangement.

In further embodiments of the invention, the converter may include a plurality of limbs connected in series between the first and second DC terminals.

In embodiments of the invention employing the use of one or more third sub-converters, the phase element of the at least one limb may include at least one AC terminal for connection to a respective phase of a multiphase AC network, and the converter further includes at least two additional limbs connected in series with the at least one limb between the first and second DC terminals, each additional limb including:

a phase element having a plurality of switching elements and at least one AC terminal for connection to a respective phase of the multiphase AC network, the plurality of switching elements being configured to be switchable to selectively interconnect a DC side voltage at a DC side of the phase element and an AC side voltage at an AC side of the phase element;

a first sub-converter connected in series with the DC side of the phase element in an electrical block, the first sub-converter being configured to be controllable to act as a first voltage source; and

a second sub-converter connected in parallel with the electrical block, the second sub-converter being configured to be controllable to act as a second voltage source,

wherein the limbs may be arranged in series so that the third sub-converter of the at least one limb is connected directly to one of the first and second DC terminals.

The method of the invention is further advantageous in that it has the flexibility to accommodate additional criteria or constraints on the operation of the converter, whereby the additional criteria or constraints may be permanent or temporary.

In one example, the method of the invention permits adaptation of the DC side voltage demand to perform zero (soft) voltage switching of the switching elements of the or each phase element and/or to introduce higher frequency pulse width modulation (PWM) switching of the switching elements of the or each phase element.

In a further example, the method of the invention permits temporary adaptation of the voltage demands to conform to a slight degradation in the AC or DC side power quality for a short time period, e.g. 100-200 ms whilst responding to a fault.

The method of controlling a converter may further include the steps of: obtaining a respective first energy management voltage demand for each sub-converter which the sub-converter is required to track to regulate the energy level of the corresponding first sub-converter; and determining a sub-converter voltage for each sub-converter that the sub-converter must contribute to track the corresponding required first energy management voltage demand. This provides a reliable means for regulating the energy level of the corresponding first sub-converter that includes one or more energy storage devices capable of selectively storing and releasing energy.

The method of controlling a converter may further include the steps of: obtaining a respective first filtering voltage demand for each sub-converter which the sub-converter is required to track to achieve active filtering of the DC converter voltage across the first and second DC terminals; and determining a sub-converter voltage for each sub-converter that the sub-converter must contribute to track the corresponding required first filtering voltage demand.

The method of controlling a converter may further include the steps of: obtaining a respective compensatory voltage demand for the or each first sub-converter which the first sub-converter is required to track to compensate for a change in real power and/or reactive power generated or absorbed at the AC side of the corresponding phase element; and determining a sub-converter voltage for the or each first sub-converter that the first sub-converter must contribute to track the corresponding required compensatory voltage demand.

In embodiments of the invention employing the use of the or each third sub-converter, the method may further include the steps of: obtaining a respective second filtering voltage demand for the or each third sub-converter which the third sub-converter is required to track to achieve active filtering of the DC converter voltage across the first and second DC terminals; and determining a sub-converter voltage for the or each third sub-converter that the third sub-converter must contribute to track the corresponding required second filtering voltage demand.

In further embodiments of the invention employing the use of the or each third sub-converter, the method may further include the steps of: obtaining a respective second energy management voltage demand for each third sub-converter which the third sub-converter is required to track to regulate the energy level of the corresponding third sub-converter; and determining a sub-converter voltage for each third sub-converter that the third sub-converter must contribute to track the corresponding required second energy management voltage demand. This provides a reliable means for regulating the energy level of the corresponding third sub-converter that includes one or more energy storage devices capable of selectively storing and releasing energy.

Preferably carrying out mathematical optimization includes creating an equivalent converter configuration which represents the voltage conditions in the converter. Creating an equivalent converter configuration in the aforementioned manner imposes constraints on the way in which the converter can be controlled and so assists in carrying out mathematical optimization to determine the or each optimal sub-converter voltage.

Creating an equivalent converter configuration which represents voltage conditions in the converter may include mapping the voltage sources for the or each limb.

Mapping the voltage sources for the or each limb helps to tailor the method of control to a given topology of the converter.

Optionally carrying out mathematical optimization may include applying a voltage weighting to the relative voltage contribution provided by each voltage source.

Applying such weightings allows variations in the performance of the or each limb to be further accommodated while continuing to optimise the operation of the converter as a whole.

Applying a voltage weighting may include determining the or each voltage weighting according to measured operating parameters of the converter.

Determining the weightings in the aforementioned manner allows the method to take into account environmental factors which might affect the healthy operation of the converter, and to alter the optimal sub-converter voltages in an effort to overcome the environmental factors and alleviate the associated impact on the operation of the converter. Examples of such environmental factors include the components in a limb running hot, or a limb suffering component damage or failure such that its performance is degraded.

When controlling the converter under a particular operating condition, applying a voltage weighting may include applying a different voltage weighting to at least one voltage source such that the or each said voltage source provides a different contribution to the other voltage sources.

Such a step allows the method to distinguish between one voltage source and another, e.g. according to how well a given voltage source is performing.

This is useful in circumstances where it becomes desirable to reduce the sub-converter voltage that a given voltage source must provide, e.g. in circumstances where a fault or other damage has degraded the performance of the given voltage source, such that the converter remains able to continue operating and provide a high level of power conversion.

The method may include carrying out mathematical optimization to determine one or more minimum individual sub-converter voltages that the corresponding sub-converter must contribute to track the corresponding required voltage demands.

Determining one or more minimum individual sub-converter voltages permits a reduction in the required voltage rating of the or each corresponding sub-converter.

According to a second aspect of the invention, there is provided a converter comprising first and second DC terminals for connection to a DC network, the converter including at least one limb connected between the first and second DC terminals, the or each limb including:

a phase element having a plurality of switching elements and at least one AC terminal for connection to an AC network, the plurality of switching elements being configured to be switchable to selectively interconnect a DC side voltage at a DC side of the phase element and an AC side voltage at an AC side of the phase element;
a first sub-converter connected in series with the DC side of the phase element in an electrical block, the first sub-converter being configured to be controllable to act as a first voltage source; and
a second sub-converter connected in parallel with the electrical block, the second sub-converter being configured to be controllable to act as a second voltage source,
wherein the converter further includes a controller programmed to:

(a) obtain a respective DC side voltage demand for the DC side voltage which the corresponding limb is required to track, and a DC converter voltage demand for the DC converter voltage across the first and second DC terminals which the converter is required to track;
(b) determine a sub-converter voltage for each sub-converter that the sub-converter must contribute to track the corresponding required DC side voltage and DC converter voltage demands;
(c) control each sub-converter as the respective voltage source to achieve the corresponding determined sub-converter voltage; and
(d) carry out mathematical optimization to determine one or more optimal sub-converter voltages.

The features and advantages of the method of the first aspect of the invention and its embodiments apply mutatis mutandis to the converter of the second aspect of the invention.

It will be appreciated that the use of the terms "first", "second" and "third" in the patent specification is merely intended to help distinguish between similar features (e.g. the first, second and third sub-converters), and is not intended to indicate the relative importance of one feature over another feature.

Preferred embodiments of the invention will now be described, by way of non-limiting examples, with reference to the accompanying drawings in which:

Figure 1 shows schematically the topology of a converter according to a first embodiment of the invention;
Figures 2a and 2b show schematically a 4-quadrant bipolar module and a 2-quadrant unipolar module respectively;
Figure 3 illustrates schematically the operation of the converter of Figure 1;
Figure 4 shows a schematic representation of an equivalent converter configuration of the converter of Figure 1;
Figure 5 illustrates schematically an exemplary layout of a controller of the converter of Figure 1;
Figures 6 to 8 illustrate, in graphical form, the operation of the converter of Figure 1;
Figure 9 shows schematically the topology of a converter according to a second embodiment of the invention;
Figure 10 illustrates schematically the operation of the converter of Figure 9;

Figure 11 shows a schematic representation of an equivalent converter configuration of the converter of Figure 9;

Figure 12 illustrates schematically an exemplary layout of a controller of the converter of Figure 9;

Figures 13a to 18 illustrate, in graphical form, the operation of the converter of Figure 9;

Figure 19 shows schematically the topology of a converter according to a third embodiment of the invention;

Figure 20 shows a schematic representation of an equivalent converter configuration of the converter of Figure 19; and

Figure 21 illustrates schematically an exemplary layout of a controller of the converter of Figure 19.

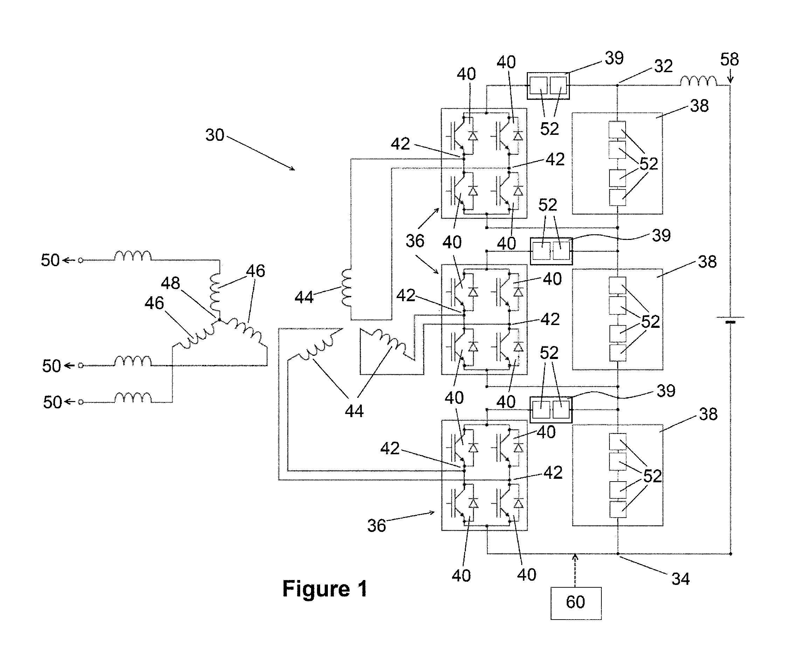

A converter according to a first embodiment of the invention is shown in Figure 1 and is designated generally by the reference numeral 30.

The converter 30 comprises first and second DC terminals 32,34, a plurality of phase elements 36, a plurality of first sub-converters 39, and a plurality of second sub-converters 38.

Each phase element 36 includes two parallel-connected pairs of series-connected switching elements 40. A junction between each pair of series-connected switching elements 40 defines an AC terminal. The AC terminals of each phase element 36 define the AC side 42 of that phase element 36.

In use, the AC terminals of each phase element 36 are interconnected by a respective one of a plurality of open secondary transformer windings 44. Each secondary transformer winding 44 is mutually coupled with a respective one of a plurality of primary transformer windings 46. The plurality of primary transformer windings 46 are connected in a star configuration in which a first end of each primary transformer winding 46 is connected to a common junction 48 and a second end of each primary transformer winding 46 is connected to a respective phase of a three-phase AC network 50. In this manner, in use, the AC side 42 of each phase element 36 is connected to a respective phase of a three-phase AC network 50.

The common junction 48 defines a neutral point of the plurality of primary transformer windings 46, and is grounded (not shown).

A DC side of each phase element 36 is connected in series with a respective one of the plurality of first sub-converters 39 to define an electrical block. Each second sub-converter 38 is connected in parallel with a respective one of the electrical blocks to form a limb.

Each sub-converter 38,39 includes a plurality of modules 52.

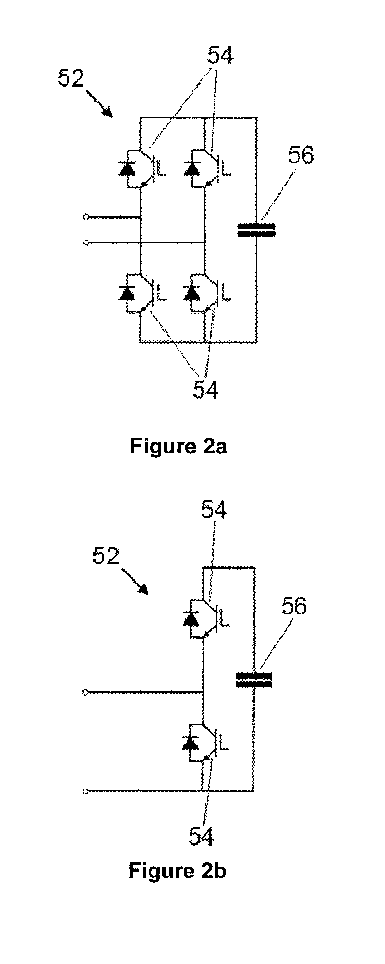

Each module 52 of each first sub-converter includes two pairs of switching elements 54 and an energy storage device 56 in the form of a capacitor. In each first sub-converter 38, the pairs of switching elements 54 are connected in parallel with the capacitor 56 in a full-bridge arrangement to define a 4-quadrant bipolar module that can provide negative, zero or positive voltage and can conduct current in two directions, as shown in Figure 2a.

Each module 52 of each second sub-converter 38 includes a pair of switching elements 54 and an energy storage device 56 in the form of a capacitor. In each second sub-converter 38, the pair of switching elements 54 is connected in parallel with the capacitor 56 in a half-bridge arrangement to define a 2-quadrant unipolar module that can provide zero or positive voltage and can conduct current in two directions, as shown in Figure 2b.

It is envisaged that, in other embodiments of the invention, at least one module of at least one of the sub-converters of the converter may be replaced by another type of module that includes at least one switching element and at least one energy storage device, the or each switching element and the or each energy storage device in the or each other type of module being arranged to be combinable to selectively provide a voltage source. For example, at least one module of the first sub-converter may be replaced by a 2-quadrant unipolar module and/or at least one module of the second sub-converter may be replaced by a 4-quadrant bipolar module.

It is also envisaged that, in still other embodiments of the invention, at least one of the sub-converters of the converter may include a combination of different types of modules, e.g. a combination including at least one 4-quadrant bipolar module and at least one 2-quadrant unipolar module.

The plurality of limbs is connected in series between the first and second DC terminals 32,34. In use, the first and second DC terminals 32,34 are respectively connected to first and second terminals of a DC network 58, the first terminal of the DC network 58 carrying a positive DC voltage, the second terminal of the DC network 58 carrying a negative DC voltage.

The configuration of each limb as set out above means that, in use, a DC side voltage appears across the parallel-connected pairs of series-connected switching elements 40 of each phase element 36, i.e. at the DC side of each phase element 36.

As such, in use, each plurality of switching elements are switchable to selectively interconnect the DC side voltage at the DC side of the corresponding phase element 36 and an AC side voltage at the AC side of the corresponding phase element 36. In the embodiment shown, each DC side voltage is a rectified version of the corresponding AC side voltage, e.g. a sinusoid, and vice versa.

In other embodiments, it is envisaged that each phase element may include a plurality of switching elements with a different configuration to selectively interconnect the DC side voltage and the AC side voltage.

Each switching element 40,54 includes a single switching device. Each switching element 40,54 further includes a passive current check element that is connected in antiparallel with each switching device.

Each switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of switching devices in each switching element may vary depending on the required voltage rating of that switching element.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

It is further envisaged that, in other embodiments of the invention, each capacitor may be replaced by another type of energy storage device that is capable of storing and releasing energy, e.g. a fuel cell or battery.

The plurality of series-connected modules 52 in each sub-converter 38,39 defines a chain-link converter.

The capacitor 56 of each module 52 is selectively bypassed or inserted into the chain-link converter by changing the states of the switching elements 54. This selectively directs current through the capacitor 56 or causes current to bypass the capacitor 56 so that the module 52 provides a negative, zero or positive voltage in the case of each first sub-converter 39, and the module 52 provides a zero or positive voltage in the case of each second sub-converter 38.

The capacitor 56 of the module 52 is bypassed when the switching elements 54 in the module 52 are configured to form a short circuit in the module 52. This causes current in the chain-link converter to pass through the short circuit and bypass the capacitor 56, and so the module 52 provides a zero voltage, i.e. the module 52 is configured in a bypassed mode.

The capacitor 56 of the module 52 is inserted into the chain-link converter when the switching elements 54 in the module 52 are configured to allow the current in the chain-link converter to flow into and out of the capacitor 56. The capacitor 56 then charges or discharges its stored energy so as to provide a non-zero voltage, i.e. the module 52 is configured in a non-bypassed mode.

It is envisaged that, in other embodiments of the invention, each module may be replaced by another type of module that includes at least one switching element and at least one energy storage device, the or each switching element and the or each energy storage device in the or each module combining to selectively provide a voltage source.

The structure of the chain-link converter permits build-up of a combined voltage across the chain-link converter, which is higher than the voltage available from each of its individual modules 52, via the insertion of the energy storage devices 56 of multiple modules 52, each providing its own voltage, into the chain-link converter. In this manner switching of each switching element 54 in each module 52 causes the chain-link converter to provide a stepped variable voltage source, which permits the generation of a voltage waveform across the chain-link converter using a step-wise approximation. As such each chain-link converter is capable of providing a wide range of complex voltage waveforms.

The configuration of the first and second sub-converters 39,38 permits their control as first and second voltage sources respectively.

The series connection of the first sub-converter 39 and the DC side of the phase element 36 in each limb permits the control of the first sub-converter 39 as a first voltage source to modify the DC side voltage at the DC side of the corresponding phase element 36. Such modification of the DC side voltage at the DC side of the corresponding phase element 36 results in a corresponding modification of the AC side voltage at the AC side 42 of the corresponding phase element 36.

The parallel connection of the second sub-converter 38 and electrical block in each limb permits the control of the second sub-converter 38 as a second voltage source to modify a respective portion of the DC converter voltage across the first and second DC terminals 32,34 that is presented to the DC network.

The converter 30 further includes a controller 60 configured to control each sub-converter 38,39.

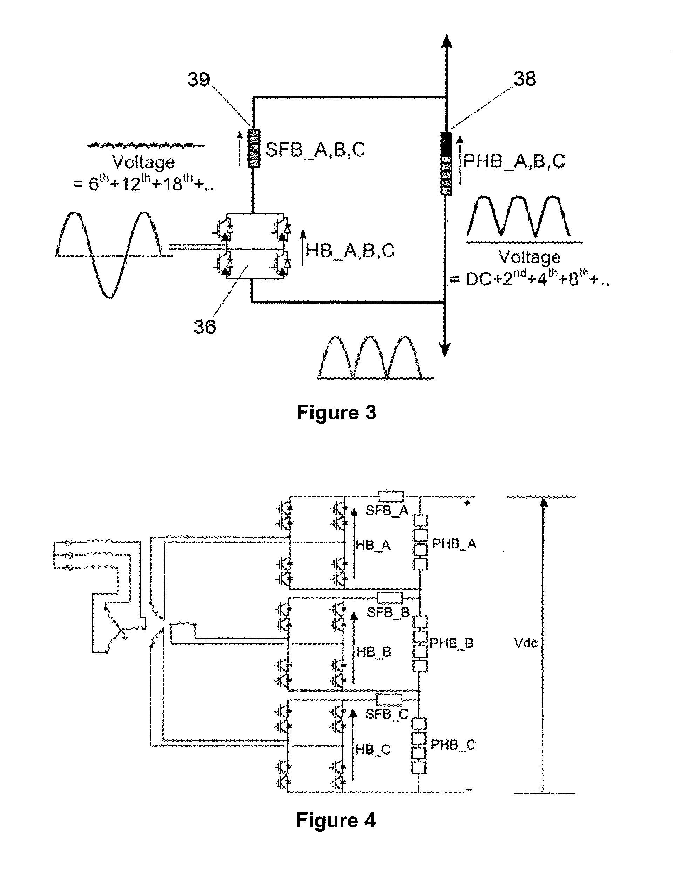

Figure 3 illustrates various control functions of the controller 60.

The controller 60 is further configured to selectively perform a first control function, which is selective control of each first sub-converter 39 to synthesize at least one first voltage component so as to transfer energy to or from that first sub-converter 39 and thereby regulate an energy level of that first sub-converter 39.

The or each first voltage component is synthesized to have the same frequency as a current component of a current flowing through the corresponding first sub-converter 39, and to be a positive integer multiple of a $2^{nd}$ harmonic voltage component. In addition, the or each first voltage component is synthesized to be in phase with a current component of a current flowing through that first sub-converter 39.

The controller 60 is further configured to selectively control each second sub-converter 38 to synthesize a second voltage component that is in anti-phase with the respective first voltage component. Control of each second sub-converter 38 ensures that the respective DC side voltage, and therefore the AC voltage at the AC side of the respective phase element 36, remains unmodified during the generation of the or each first voltage component. Thus, energy level regulation of each first sub-converter 39 may be carried out at any time during the operation of the converter 30 without affecting the power transfer between the AC and DC networks 50,58.

The controller is further configured to selectively perform a second control function, which is selective control of:

- each second sub-converter 38 to modify the respective portion of the DC converter voltage to include at least two harmonic components, each harmonic component being a positive integer multiple of a $2^{nd}$ harmonic component (e.g. $2^{nd}$, $4^{th}$, $8^{th}$, $10^{th}$, etc);
- each first sub-converter 39 to synthesize a voltage waveform that includes at least one harmonic component, the or each harmonic component being a positive integer multiple of a $6^{th}$ harmonic component (e.g. $6^{th}$, $12^{th}$, $18^{th}$, etc).

The controller 60 is further configured to selectively control each second sub-converter 38 to modify the respective portion of the DC converter voltage to operate at a phase difference nominally of 120 electrical degrees to the other portions of the DC converter voltage.

Simultaneously controlling:

- each second sub-converter 38 to modify the respective portion of the DC converter voltage to include at least two harmonic components, each harmonic component being a positive integer multiple of a $2^{nd}$ harmonic component; and
- each first sub-converter 39 to synthesize a voltage waveform that includes at least one harmonic component, the or each harmonic component being a positive integer multiple of a $6^{th}$ harmonic component,

results in modification of the respective DC side voltage into a near-approximation of an offset rectified sinusoidal waveform for presentation to the DC side of the respective phase element 36. This results in formation of high quality AC sinusoidal waveforms with minimal harmonic distortion at the AC sides of the phase elements 36.

The control of each sub-converter 38,39 in the manner set out above not only results in cancellation of the harmonic components when the portions of the DC converter voltage are summed, thus leaving a combined, ripple-free DC converter voltage across the first and second DC terminals 32,34 for presentation to the DC network 58, but also actively filters undesirable ripple harmonic components, each of which is a positive integer multiple of a $6^{th}$ harmonic component, that are present in the respective DC side voltage and thereby prevents the undesirable ripple harmonic components from appearing in the DC converter voltage presented to the DC network 58.

Furthermore the control of each second sub-converter 38 to modify the respective portion of the DC converter voltage to include the harmonic components removes the need to control each first sub-converter 39 to actively filter undesirable ripple harmonic components that are not positive integer multiples of a $6^{th}$ harmonic component, thus reducing the required voltage rating of each first sub-converter 39.

The controller 60 is further configured to selectively perform a third control function, which is selective control of each first sub-converter 39 to generate a compensatory DC voltage component for presentation to the DC side of the respective phase element 36 so as to compensate for a change in the respective DC side voltage caused by the change in real power and/or reactive power generated or absorbed at an AC side of the respective phase element 36 and thereby inhibit the change in the respective DC side voltage from modifying the respective portion of the DC converter voltage.

When the converter 30 is controlled to generate or absorb reactive power at the AC sides of its phase elements 36 (e.g. through switching of the switching elements 40 of the phase elements 36), the AC voltage at the AC side of each phase element 36 must increase or decrease in magnitude. An increase or decrease in the AC voltage at the AC side of each phase element 36 in turn results in an increase or decrease in the DC side voltage presented to the DC side of each phase element 36, which then causes an increase or decrease in each portion of the DC converter voltage and thereby alters the DC converter voltage across the first and second DC terminals 32,34.

To inhibit the change in the respective DC side voltage from modifying the respective portion of the DC converter voltage, the controller 60 controls each first sub-converter 39 to generate a compensatory DC voltage component for presentation to the DC side of the respective phase element 36 so as to compensate for a change in the respective DC side voltage caused by the change in reactive power generated or absorbed at an AC side of the respective phase element 36.

Control of each first sub-converter 39 in accordance with the third control function inhibits any effect a change in reactive power generated or absorbed at an AC side of the respective phase element 36 might have on the respective portion of the DC converter voltage. This thereby prevents any undesirable change in the respective portion of the DC converter voltage that would have otherwise resulted from the change in reactive power generated or absorbed at an AC side of the respective phase element 36.

The configuration of the converter 30 therefore permits operation of the converter 30 over a wide range of real power and reactive power with little to zero detrimental effect on the operation of the DC side of the converter 30.

The controller 60 is further configured to implement a first method of controlling the converter 30.

The first method comprises a first step of obtaining a respective DC side voltage demand for the DC side voltage which the corresponding limb is required to track, and a DC converter voltage demand for the DC converter voltage across the first and second DC terminals 32,34 which the converter 30 is required to track.

The first step further includes optional sub-steps of:

- obtaining a respective first energy management voltage demand for each sub-converter 38,39 which the sub-converter 38,39 is required to track to regulate the energy level of the corresponding first sub-converter 39, as per the first control function;
- obtaining a respective first filtering voltage demand for each sub-converter 38,39 which the sub-converter 38,39 is required to track to achieve active filtering of the DC converter voltage across the first and second DC terminals 32,34, as per the second control function;
- obtaining a respective compensatory voltage demand for each first sub-converter 39 which the first sub-converter 39 is required to track to generate the compensatory DC voltage component, as per the third control function.

The first method also includes a second step of determining a sub-converter voltage for each sub-converter 38,39 that the sub-converter 38,39 must contribute to track the corresponding required voltage demands.

The various demands may be obtained directly from a higher-level controller. Alternatively the various demands may be obtained directly from the controller carrying out its own calculations.

More particularly, the first method of the invention includes carrying out mathematical optimization to determine a number of optimal sub-converter voltages.

Carrying out such mathematical optimization includes creating an equivalent converter configuration which represents the voltage conditions in the converter 30, as shown in Figure 4.

In the equivalent converter configuration shown, the sub-converter voltages of the first sub-converters 39 are respectively represented by SFB_A, SFB_B and SFB_C, and the sub-converter voltages of the second sub-converters 38 are respectively represented by PHB_A, PHB_B, PHB_C.

The equivalent converter configuration also represents the respective DC side voltage HB_A, HB_B, HB_C that each limb is required to track, e.g. match as closely as possible, and the DC converter voltage demand Vdc that the converter 30 is required to track.

Creating an equivalent converter configuration which represents the voltage conditions in the converter 30 additionally includes mapping the voltage sources.

One way in which the voltage sources may be mapped is by conducting a Kirchhoff analysis of the equivalent converter configuration to obtain the following equations:

$$HB\_A = SFB\_A_{Filt\_Q} + PHB\_A_{Filt\_Q}$$

$$HB\_B = SFB\_B_{Filt\_Q} + PHB\_B_{Filt\_Q}$$

$$HB\_C = SFB\_C_{Filt\_Q} + PHB\_C_{Filt\_Q}$$

$$SFB\_A = SFB\_A_{Filt\_Q} - V_{energy\_A}$$

$$SFB\_B = SFB\_B_{Filt\_Q} - V_{energy\_B}$$

$$SFB\_C = SFB\_C_{Filt\_Q} - V_{energy\_C}$$

$$PHB\_A = PHB\_A_{Filt\_Q} + V_{energy\_A}$$

$$PHB\_B = PHB\_B_{Filt\_Q} + V_{energy\_B}$$

$$PHB\_C = PHB\_C_{Filt\_Q} + V_{energy\_C}$$

$$Vdc = PHB\_A + PHB\_B + PHB\_C$$

$V_{energy\_A}$, $V_{energy\_B}$, $V_{energy\_C}$ are the respective voltage components of the sub-converter voltages that the first and second sub-converters 38,39 must contribute to track the corresponding required first energy management voltage demands.

$SFB\_A_{Filt\_Q}$, $SFB\_B_{Filt\_Q}$, $SFB\_C_{Filt\_Q}$ are the respective sub-converter voltages that the first sub-converters 39 need to be contribute to track the corresponding required filtering and compensatory voltage demands, in addition to enabling the corresponding limb to track the corresponding required DC side voltage demand HB_A, HB_B, HB_C and enabling the converter 30 to track the corresponding required DC converter voltage demand Vdc.

$PHB\_A_{Filt\_Q}$, $PHB\_B_{Filt\_Q}$, $PHB\_C_{Filt\_Q}$ are the respective sub-converter voltages that the second sub-converters 38 need to be contribute to track the corresponding required first filtering voltage demands, in addition to enabling the corresponding limb to track the corresponding required DC side voltage demand HB_A, HB_B, HB_C and enabling the converter 30 to track the corresponding required DC converter voltage demand Vdc.

The preceding equations above are then expressed in a matrix form:

$$A \cdot x = b$$

where

$$
A = \begin{pmatrix}
0 & 0 & 0 & 0 & 0 & 0 & 1 & 0 & 0 & 1 & 0 & 0 \\
0 & 0 & 0 & 0 & 0 & 0 & 0 & 1 & 0 & 0 & 1 & 0 \\
0 & 0 & 0 & 0 & 0 & 0 & 0 & 0 & 1 & 0 & 0 & 1 \\
0 & 0 & 0 & -1 & 0 & 0 & 1 & 0 & 0 & 0 & 0 & 0 \\
0 & 0 & 0 & 0 & -1 & 0 & 0 & 1 & 0 & 0 & 0 & 0 \\
0 & 0 & 0 & 0 & 0 & -1 & 0 & 0 & 1 & 0 & 0 & 0 \\
-1 & 0 & 0 & 0 & 0 & 0 & 0 & 0 & 0 & 1 & 0 & 0 \\
0 & -1 & 0 & 0 & 0 & 0 & 0 & 0 & 0 & 0 & 1 & 0 \\
0 & 0 & -1 & 0 & 0 & 0 & 0 & 0 & 0 & 0 & 0 & 1 \\
1 & 1 & 1 & 0 & 0 & 0 & 0 & 0 & 0 & 0 & 0 & 0
\end{pmatrix}
$$

$$x = \begin{pmatrix} x_1 & x_2 & x_3 & x_4 \end{pmatrix}^T$$
$$x_1 = \begin{pmatrix} PHB\_A & PHB\_B & PHB\_C \end{pmatrix}$$
$$x_2 = \begin{pmatrix} SFB\_A & SFB\_B & SFB\_C \end{pmatrix}$$
$$x_3 = \begin{pmatrix} SFB\_A_{Filt\_Q} & SFB\_B_{Filt\_Q} & SFB\_C_{Filt\_Q} \end{pmatrix}$$
$$x_4 = \begin{pmatrix} PHB\_A_{Filt\_Q} & PHB\_B_{Filt\_Q} & PHB\_C_{Filt\_Q} \end{pmatrix}$$

$$b = \begin{pmatrix} b_1 & b_2 & b_3 & Vdc \end{pmatrix}^T$$
$$b_1 = \begin{pmatrix} HB\_A & HB\_B & HB\_C \end{pmatrix}$$
$$b_2 = \begin{pmatrix} V_{energy\_A} & V_{energy\_B} & V_{energy\_C} \end{pmatrix}$$
$$b_3 = \begin{pmatrix} -V_{energy\_A} & -V_{energy\_B} & -V_{energy\_C} \end{pmatrix}$$

The matrix defines the equality constraints expressed as linear equations that the first method employs to determine the optimal voltage sources to be provided through control of the sub-converters 38,39 as the respective voltage sources to achieve the corresponding determined sub-converter voltages.

The aforementioned mathematical optimization step may include applying a voltage weighting to the relative voltage contribution provided by each voltage source. The respective voltage weighting for each voltage source is determined according to measured operating parameters of the converter. The various voltage weightings can be determined throughout operation of the converter 30 so as to permit an updating of the voltage weightings, e.g. in response to changing environmental conditions. As a result the various voltage weightings can vary as the converter 30 is controlled.

For example, during normal operation of the converter 30, an identical voltage weighting is applied to each voltage source-. However, when controlling the converter 30 under certain abnormal operating conditions, e.g. unbalanced operating conditions, a different voltage weighting is applied to the voltage contribution provided by at least one voltage source.

In addition to the foregoing the first method includes carrying out mathematical optimization to determine a minimum individual sub-converter voltage that each corresponding sub-converter 38,39 must contribute to track the corresponding required voltage demands.

One way in which the minimum individual sub-converter voltages may be determined and the aforementioned individual voltage weightings applied to the voltage contributions of the voltage sources is by solving a nonlinear optimization of the general form:

$$\min_{x} J_{Voltage} = \Psi\big(x(t_1)\big) + \int_{t_0}^{t_1} f(x(t), t)dt$$

subject to the equality constrained equation of the form:

$$A.x = b$$

where

$J_{Voltage}$ is the voltage objective function to be minimized;

$\Psi$ is the voltage weighting at time $t_1$;

$f$ is the voltage cost function which in the embodiment described includes a voltage weighting matrix $Q_l$;

$x$ is a vector which is expressed above;

$t_0$ is the time at which a particular period of control of the converter 30 starts; and

$t_1$ is the time at which a particular period of control of the converter 30 ends.

The voltage weighting matrix $Q_l$ is determined according to measured operating parameters of the converter 30, and may be so determined throughout the operation of the converter 30, such that it can vary as the said converter 30 is controlled in response to changes in the operation of the converter 30.

Following the aforementioned steps the current objective function J(x) to be minimized is then defined, i.e.

$$J(x) = x^T.Q_I.x$$

The current objective function J(x) is minimised subject to the equality constraints expressed as linear equations above, where x is a vector which is expressed above, and $x^T$ is the transpose of the vector x.

When subject only to an equality constrained equation, as mentioned above, the Lagrangian (or the method of Lagrange multipliers) is a technique for solving the above-identified nonlinear optimization in order to find local minima of the voltage objective function $J_{Voltage}$ and the current objective function J(x). It may also be solved using other optimization algorithms, including iterative and programming algorithms.

As a general optimal control problem, the aforementioned nonlinear optimization could additionally include one or more inequality constraints in which case it could be solved by using the further method of Hamiltonian (Pontryagin's minimum principle).

One example of such an inequality constraint is:

$$
C \begin{pmatrix} PHB\_A \\ PHB\_B \\ PHB\_C \\ SFB\_A \\ SFB\_B \\ SFB\_C \\ SFB\_A_{Filt\_Q} \\ SFB\_B_{Filt\_Q} \\ SFB\_C_{Filt\_Q} \\ PHB\_A_{Filt\_Q} \\ PHB\_B_{Filt\_Q} \\ PHB\_C_{Filt\_Q} \end{pmatrix} \leq \begin{pmatrix} PHB\_A^{max} \\ PHB\_B^{max} \\ PHB\_C^{max} \\ SFB\_A^{max} \\ SFB\_B^{max} \\ SFB\_C^{max} \\ SFB\_A_{Filt\_Q}{}^{max} \\ SFB\_B_{Filt\_Q}{}^{max} \\ SFB\_C_{Filt\_Q}{}^{max} \\ PHB\_A_{Filt\_Q}{}^{max} \\ PHB\_B_{Filt\_Q}{}^{max} \\ PHB\_C_{Filt\_Q}{}^{max} \end{pmatrix}
$$

where

$C$ is a matrix which maps possible maximum voltages range provided by the sub-converters 38,39; and

$d$ is a vector representing of the maximum desired voltage in each sub-converter 38,39.

In either case the minimum sub-converter voltages $SFB\_A_{Filt\_Q}$, $SFB\_B_{Filt\_Q}$, $SFB\_C_{Filt\_Q}$, $PHB\_A_{Filt\_Q}$, $PHB\_B_{Filt\_Q}$, $PHB\_C_{Filt\_Q}$ may also be determined by solving a nonlinear optimization of the form $\max_x \{-J_{Voltage}\}$.

Meanwhile, the first method of the invention includes a third step of controlling each sub-converter 38,39 as the respective voltage source to achieve the corresponding determined sub-converter voltage.

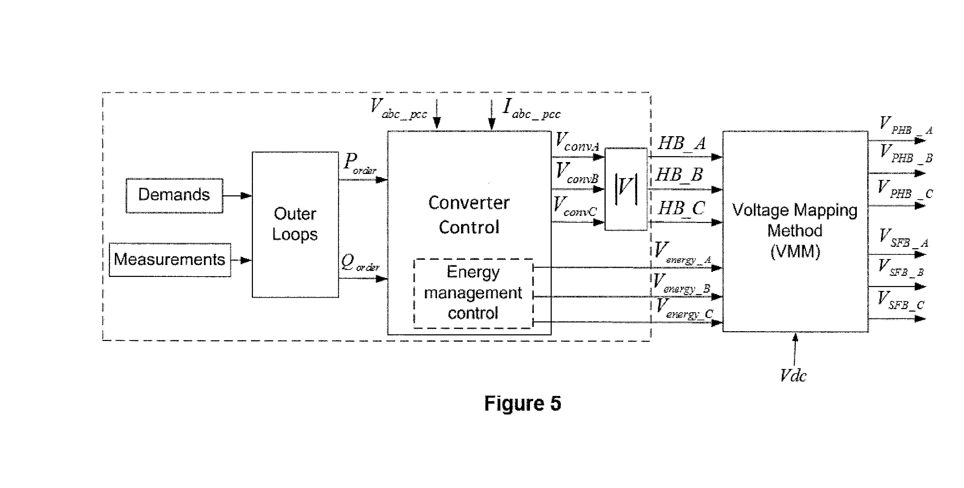

Figure 5 illustrates schematically an exemplary layout of the controller 60.

The controller 60 includes an outer loops block that is configured to receive demands and measurements and to output real and reactive power demands $P_{order}$, $Q_{Order}$ to a converter control block. The converter control block is also configured to receive AC phase voltages and currents $V_{abc\_pcc}$, $I_{abc\_pcc}$ measured at a point of common coupling connected to the AC sides of the phase elements 36. The converter control block processes the received values to output AC side voltage demands VconvA, VconvB, VconvC, which are then converted into corresponding DC side voltage demands HB_A, HB_B, HB_C. The converter control block also includes an energy management control sub-block that defines the required first energy management voltage demands $V_{energy\_A}$, $V_{energy\_B}$, $V_{energy\_C}$.

The DC side voltage demands HB_A, HB_B, HB_C and the first energy management voltage demands $V_{energy\_A}$, $V_{energy\_B}$, $V_{energy\_C}$ are provided to a Voltage Mapping Method (VMM) control block, which also receives a DC converter voltage demand Vdc. The VMM control block determines the required voltage contributions $SFB\text{-}A_{Filt\_Q})$ $SFB\_B_{Filt\_Q}$, $SFB\_C_{Filt\_Q}$, $PHB\_A_{Filt\_Q}$, $PHB\_B_{Filt\_Q}$, $PHB\_C_{Filt\_Q}$ for the respective sub-converters 38,39 and then generates the corresponding voltage signals $V_{SFB\_A}$, $V_{SFB-B}$, $V_{SFB-C}$, $V_{PHB-A}$, $V_{PHB\_B}$, $V_{PHB-C}$, which are passed to a lower control loop (not shown) in the form of a switching algorithm that is responsible for the switching commands for each module 52 of each sub-converter 38,39. In this manner the sub-converters 38,39 can be operated as their respective voltage sources to achieve the corresponding determined sub-converter voltages.

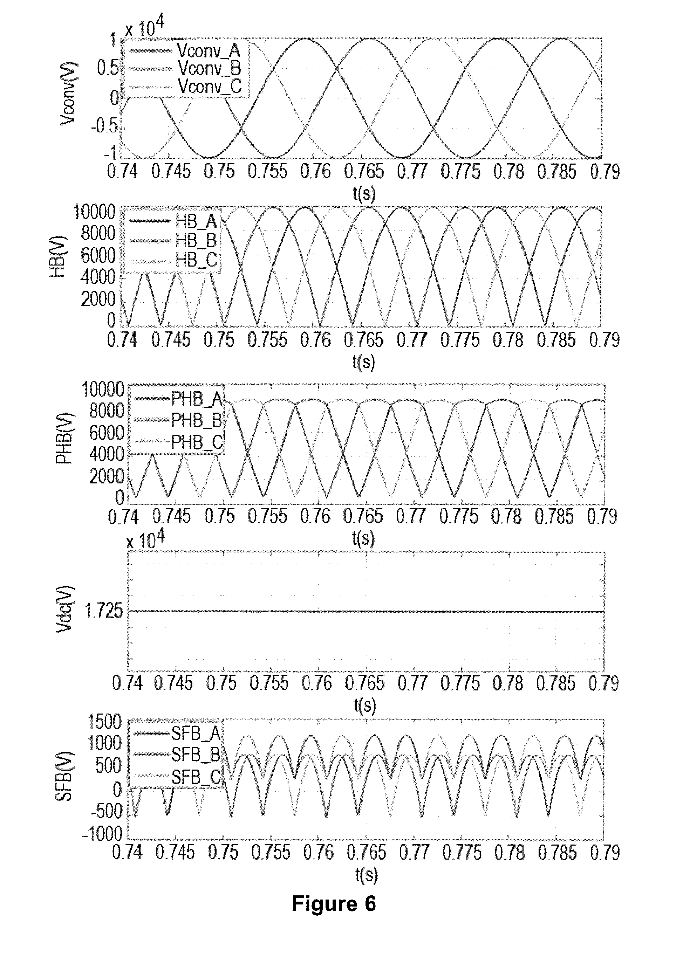

Figure 6 illustrates, in graphical form, the operation of the converter 30 under balanced operating conditions, where the real power demand is 1.0 PU and the reactive power demand is 0.4 PU. It can be seen from Figure 6 that the controller 60 is able to operate the converter 30 to maintain the desired AC and DC converter voltages required of the balanced operating conditions.

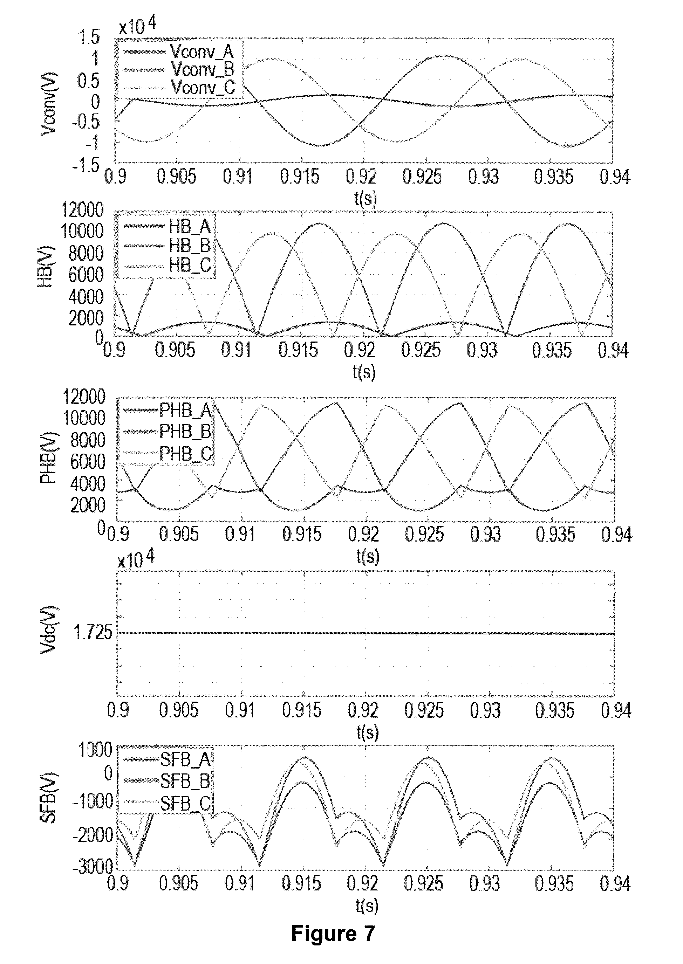

Figure 7 illustrates, in graphical form, the operation of the converter 30 under unbalanced operating conditions, where one of the phases Phase_A of the AC network 50 experiences a short to ground, the real power demand is 0.5 PU and the reactive power demand is 0.4 PU. It can be seen from Figure 7 that the fault in Phase_A results in a drop in the corresponding AC phase voltage, and that the controller 60 is able to continue the operation of the converter 30 under the unbalanced operating conditions whilst maintaining the desired DC converter voltage.

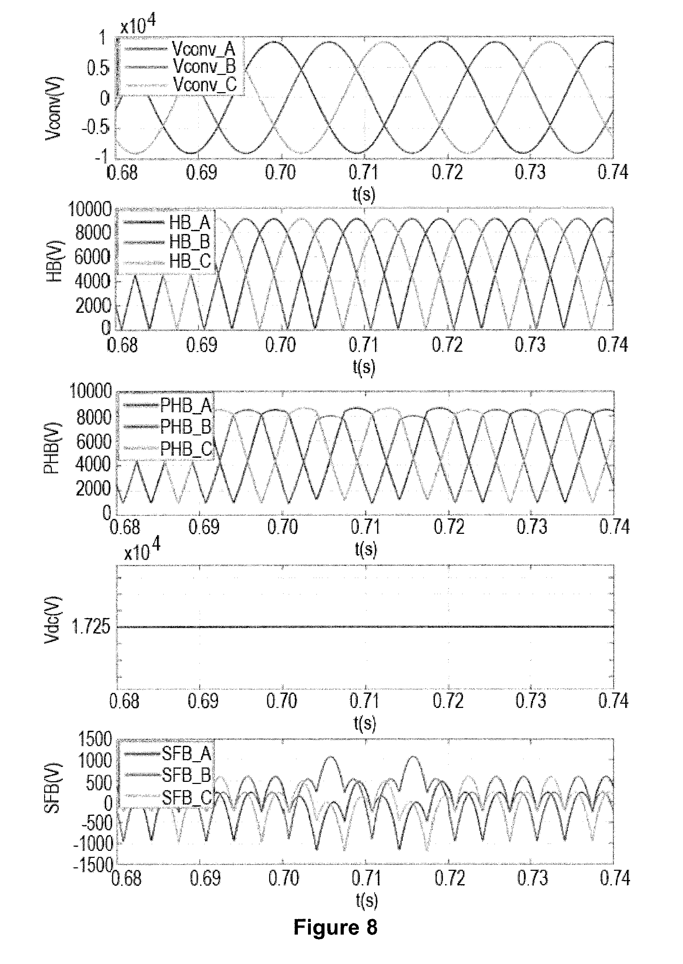

Figure 8 illustrates, in graphical form, the operation of the converter 30 where the voltage contribution of a given sub-converter 38 is dynamically reduced compared to the other second sub-converters 38 (i.e. by changing its weight in the voltage weighting matrix $Q_l$). More particularly, the voltage contribution PHB_B of the given sub-converter 38 is reduced at t = 0.7 s to t = 0.72 s. It can be seen from Figure 8 that the controller 60 is able to operate the converter 30 to maintain the desired AC and DC converter voltages by increasing the voltage contribution SFB_B of the corresponding sub-converter 39 to compensate for the reduction in the voltage contribution PHB_B of the given sub-converter 38.

It is shown therefore that the operation of the converter 30 of Figure 1 using the first method allows the instantaneous calculation of the optimal sub-converter voltages to meet a number of criteria or constraints designed to maintain the operation of the converter 30 within its nominal voltage and current rating whilst meeting specified AC and DC side power quality requirements, under various normal and abnormal operating conditions.

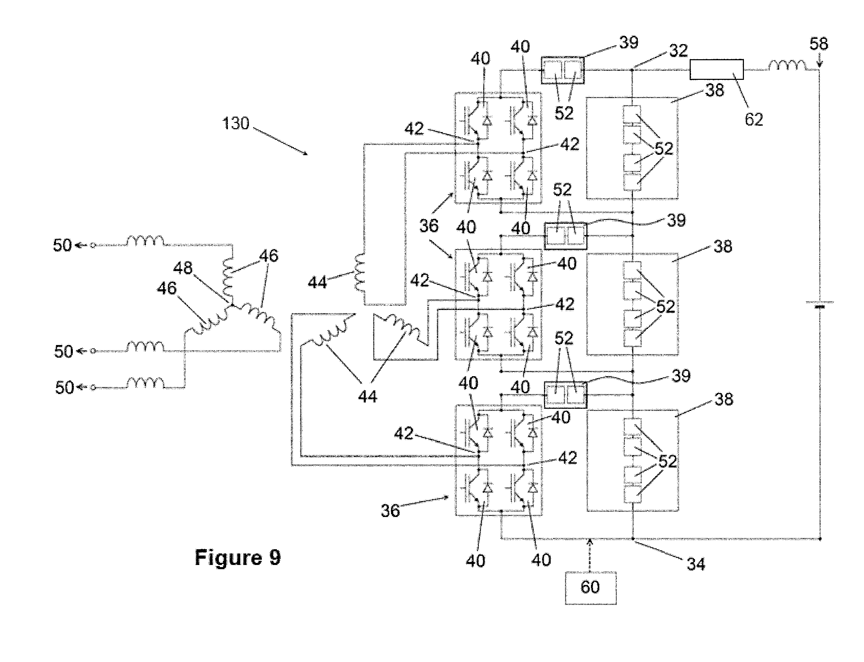

A converter according to a second embodiment of the invention is shown in Figure 9 and is designated generally by the reference numeral 130. The converter 130 of Figure 9 is similar in structure and operation to the converter 30 of Figure 1, and like features share the same reference numerals.

The converter 130 of Figure 9 differs from the converter 30 of Figure 1 in that one of the limbs of the converter 130 of Figure 9 further includes a third sub-converter 62 connected in series with the corresponding first sub-converter 39, with the corresponding second sub-converter 38 being connected to a common connection point between the corresponding first and third sub-converters to form a "T" arrangement.

In the embodiment shown, the limbs are arranged in series so that the third sub-converter is connected directly to the first DC terminal 32. This means that the DC converter voltage across the first and second DC terminals 32,34 is the sum of the sub-converter voltages of the second sub-converters 38 and the third sub-converter 62.

It is envisaged that, in other embodiments of the invention, the third sub-converter 62 may be connected directly to the second DC terminal 34, instead of the first DC terminal 32.

The third sub-converter 62 is structurally and operationally configured as a chain-link converter in the same manner as each first sub-converter 39 described above with reference to the converter 30 of Figure 1. Thus, the third sub-converter 62 is configured to be controllable to act as a third voltage source.

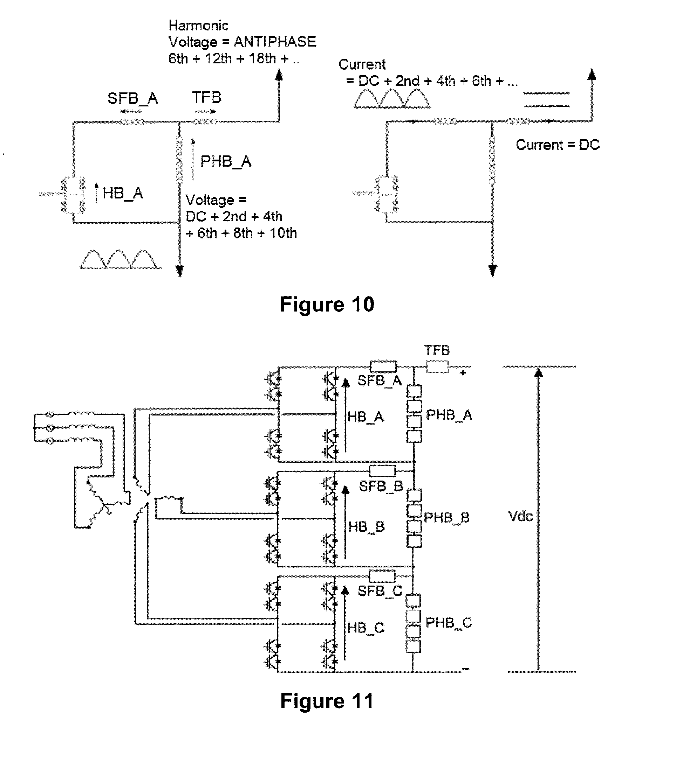

Figure 10 illustrates a control function of the controller 60.

The controller 60 is configured to perform a fourth control function, which is selective control of the third sub-converter 62 to synthesize a voltage waveform that includes at least one harmonic component, the or each harmonic component being a positive integer multiple of a $6^{th}$ harmonic component (e.g. $6^{th}$, $12^{th}$, $18^{th}$, etc).

Controlling the third sub-converter 62 in this manner actively filters undesirable ripple harmonic components, each of which is a positive integer multiple of a $6^{th}$ harmonic component, that are present in the corresponding DC side voltage and thereby prevents undesirable ripple harmonic components from appearing in the DC converter voltage presented to the DC electrical network 58.

It will be appreciated that it is not necessary to control each of the second sub-converters 38 to synthesize at least two $2^{nd}$ harmonic components at the same time as controlling the third sub-converter 62 to synthesize one or more $6^{th}$ harmonic components, which would be the case if, for example, each first sub-converter 39 located on the other side of the "T" arrangement was used as a harmonic filter.

It will be further appreciated that the controller 60 may be configured to selectively control each first sub-converter 39 to synthesize one or more harmonic components in the form of a $6^{th}$ harmonic component or a positive integer multiple of a $6^{th}$ harmonic component, so as to share the active filtering duty with the third sub-converter 62.

The generation of harmonic voltages in the presence of a direct current means that in principle there is no energy exchange with the third sub-converter 62 because the voltage and current are at different frequencies.

The controller 60 is however further configured to selectively control the third sub-converter 62 to synthesize at least one other voltage component (e.g. a DC voltage component) so as to transfer energy to or from the third sub-converter 62 and thereby minimise a net change in energy level of the third sub-converter 62.

Controlling the third sub-converter 62 in this manner allows the injection of a relatively small DC voltage to interact with the direct current flowing through the third sub-converter 62 and create a power and energy exchange mechanism that may be used for dynamic stabilisation and compensation of losses.

So as to compensate for the effect of the third voltage component on the second sub-converter 38 in each limb, the controller 60 is configured to selectively control each second sub-converter 38 to synthesize one or more second voltage components to minimise a net change in the DC voltage across the respective limb, where the or each second voltage component is in the form of a $2^{nd}$ harmonic component.

The controller 60 is further configured to implement a second method of controlling the converter 130.

The second method comprises a first step of obtaining a respective DC side voltage demand for the DC side voltage which the corresponding limb is required to track, and a DC converter voltage demand for the DC converter voltage across the first and second DC terminals 32,34 which the converter 130 is required to track.

The first step further includes optional sub-steps of:

- obtaining a respective first energy management voltage demand for each sub-converter 38,39 which the sub-converter 38,39 is required to track to regulate the energy level of the corresponding first sub-converter 39, as per the first control function;
- obtaining a respective first filtering voltage demand for each sub-converter 38,39 which the sub-converter 38,39 is required to track to achieve active filtering of the DC converter voltage across the first and second DC terminals 32,34, as per the second control function;
- obtaining a respective compensatory voltage demand for each first sub-converter 39 which the first sub-converter 39 is required to track to generate the compensatory DC voltage component, as per the third control function;
- obtaining a respective second filtering voltage demand for the third sub-converter 62 which the third sub-converter 62 is required to track to achieve active filtering of the DC converter voltage across the first and second DC terminals 32,34, as per the fourth control function;

- obtaining a respective second energy management voltage demand for the third sub-converter 62 which the third sub-converter 62 is required to track to regulate the energy level of the third sub-converter 62, as per the fourth control function.

The second method also includes a second step of determining a sub-converter voltage for each sub-converter 38,39,62 that the sub-converter 38,39,62 must contribute to track the corresponding required voltage demands.

The various demands may be obtained directly from a higher-level controller. Alternatively the various demands may be obtained directly from the controller carrying out its own calculations.

More particularly, the second method of the invention includes carrying out mathematical optimization to determine a number of optimal sub-converter voltages.

Carrying out such mathematical optimization includes creating an equivalent converter configuration which represents the voltage conditions in the converter 130, as shown in Figure 11.

In the equivalent converter configuration shown, the sub-converter voltages of the first sub-converters 39 are respectively represented by SFB_A, SFB_B and SFB_C, the sub-converter voltages of the second sub-converters 38 are respectively represented by PHB_A, PHB_B, PHB_C, and the sub-converter voltage of the third sub-converter 62 is represented by TFB.

The equivalent converter configuration also represents the respective DC side voltage HB_A, HB_B, HB_C that each limb is required to track, e.g. match as closely as possible, and the DC converter voltage demand Vdc that the converter 130 is required to track.

Creating an equivalent converter configuration which represents the voltage conditions in the converter 130 additionally includes mapping the voltage sources.

One way in which the voltage sources may be mapped is by conducting a Kirchhoff analysis of the equivalent converter configuration to obtain the following equations:

$$HB\_A = SFB\_A_{Filt\_Q} + PHB\_A_{Filt\_Q}$$

$$HB\_B = SFB\_B_{Filt\_Q} + PHB\_B_{Filt\_Q}$$

$$HB\_C = SFB\_C_{Filt\_Q} + PHB\_C_{Filt\_Q}$$

$$SFB\_A = SFB\_A_{Filt\_Q} - V_{energy\_A}$$

$$SFB\_B = SFB\_B_{Filt\_Q} - V_{energy\_B}$$

$$SFB\_C = SFB\_C_{Filt\_Q} - V_{energy\_C}$$

$$PHB\_A = PHB\_A_{Filt\_Q} + V_{energy\_A}$$

$$PHB\_B = PHB\_B_{Filt\_Q} + V_{energy\_B}$$

$$PHB\_C = PHB\_C_{Filt\_Q} + V_{energy\_C}$$

$$TFB = TFB_{Filt\_Q} + V_{energyT}$$

$$V_{dc} = PHB\_A + PHB\_B + PHB\_C + TFB$$

$V_{energy\_A}$, $V_{energy\_B}$, $V_{energy\_C}$ are the respective voltage components of the sub-converter voltages that the first and second sub-converters 38,39 must contribute to track the corresponding required first energy management voltage demands.

SFB-$A_{Filt\_Q}$, SFB_$B_{Filt\_Q}$, SFB_$C_{Filt\_Q}$ are the respective sub-converter voltages that the first sub-converters 39 need to be contribute to track the corresponding required filtering and compensatory voltage demands, in addition to enabling the corresponding limb to track the corresponding required DC side voltage demand HB_A, HB_B, HB_C and enabling the converter 130 to track the corresponding required DC converter voltage demand Vdc.

PHB_$A_{Filt\_Q}$, PHB_$B_{Filt\_Q}$, PHB_$C_{Filt\_Q}$ are the respective sub-converter voltages that the second sub-converters 38 need to be contribute to track the corresponding required first filtering voltage demands, in addition to enabling the corresponding limb to track the corresponding required DC side voltage demand HB_A, HB_B, HB_C and enabling the converter 130 to track the corresponding required DC converter voltage demand Vdc.

$V_{energyT}$ is the third voltage component of the sub-converter voltage that the third sub-converter 62 must contribute to track the corresponding required second energy management voltage demand.

$TFB_{Filt\_Q}$ is the sub-converter voltage that the third sub-converter 62 needs to be contribute to track the required second filtering voltage demands, in addition to enabling the converter 130 to track the corresponding required DC converter voltage demand Vdc.

The preceding equations above are then expressed in a matrix form:

$$A.x = b$$

where

$$A = \begin{pmatrix}
0 & 0 & 0 & 0 & 0 & 0 & 1 & 0 & 0 & 1 & 0 & 0 & 0 & 0 \\
0 & 0 & 0 & 0 & 0 & 0 & 0 & 1 & 0 & 0 & 1 & 0 & 0 & 0 \\
0 & 0 & 0 & 0 & 0 & 0 & 0 & 0 & 1 & 0 & 0 & 1 & 0 & 0 \\
0 & 0 & 0 & -1 & 0 & 0 & 1 & 0 & 0 & 0 & 0 & 0 & 0 & 0 \\
0 & 0 & 0 & 0 & -1 & 0 & 0 & 1 & 0 & 0 & 0 & 0 & 0 & 0 \\
0 & 0 & 0 & 0 & 0 & -1 & 0 & 0 & 1 & 0 & 0 & 0 & 0 & 0 \\
-1 & 0 & 0 & 0 & 0 & 0 & 0 & 0 & 0 & 1 & 0 & 0 & 0 & 0 \\
0 & -1 & 0 & 0 & 0 & 0 & 0 & 0 & 0 & 0 & 1 & 0 & 0 & 0 \\
0 & 0 & -1 & 0 & 0 & 0 & 0 & 0 & 0 & 0 & 0 & 1 & 0 & 0 \\
0 & 0 & 0 & 0 & 0 & 0 & 0 & 0 & 0 & 0 & 0 & 0 & 1 & -1 \\
1 & 1 & 1 & 0 & 0 & 0 & 0 & 0 & 0 & 0 & 0 & 0 & 0 & 1
\end{pmatrix}$$

$$x = \begin{pmatrix} x_1 & x_2 & x_3 & x_4 & x_5 \end{pmatrix}^T$$
$$x_1 = \begin{pmatrix} PHB\_A & PHB\_B & PHB\_C \end{pmatrix}$$
$$x_2 = \begin{pmatrix} SFB\_A & SFB\_B & SFB\_C \end{pmatrix}$$
$$x_3 = \begin{pmatrix} SFB\_A_{Filt\_Q} & SFB\_B_{Filt\_Q} & SFB\_C_{Filt\_Q} \end{pmatrix}$$
$$x_4 = \begin{pmatrix} PHB\_A_{Filt\_Q} & PHB\_B_{Filt\_Q} & PHB\_C_{Filt\_Q} \end{pmatrix}$$
$$x_5 = \begin{pmatrix} TFB_{Filt\_Q} & TFB \end{pmatrix}$$

$$b = \begin{pmatrix} b_1 & b_2 & b_3 & -V_{energyT} & V_{dc} \end{pmatrix}^T$$
$$b_1 = \begin{pmatrix} HB\_A & HB\_B & HB\_C \end{pmatrix}$$
$$b_2 = \begin{pmatrix} V_{energy\_A} & V_{energy\_B} & V_{energy\_C} \end{pmatrix}$$
$$b_3 = \begin{pmatrix} -V_{energy\_A} & -V_{energy\_B} & -V_{energy\_C} \end{pmatrix}$$

The matrix defines the equality constraints expressed as linear equations that the second method employs to determine the optimal voltage sources to be provided through control of the sub-converters 38,39,62 as the respective voltage sources to achieve the corresponding determined sub-converter voltages.

The aforementioned mathematical optimization step may include applying a voltage weighting to the relative voltage contribution provided by each voltage source. The respective voltage weighting for each voltage source is determined according to measured operating parameters of the converter. The various voltage weightings can be determined throughout operation of the converter 130 so as to permit an updating of the voltage weightings, e.g. in response to changing environmental conditions. As a result the various voltage weightings can vary as the converter 130 is controlled.

For example, during normal operation of the converter 130, an identical voltage weighting is applied to each voltage source. However, when controlling the converter 130 under certain abnormal operating conditions, e.g. unbalanced operating conditions, a different voltage weighting is applied to the voltage contribution provided by at least one voltage source.

In addition to the foregoing the second method includes carrying out mathematical optimization to determine a minimum individual sub-converter voltage that each corresponding sub-converter 38,39,62 must contribute to track the corresponding required voltage demands.

One way in which the minimum individual sub-converter voltages may be determined and the aforementioned individual voltage weightings applied to the voltage contributions of the voltage sources is by solving a nonlinear optimization in the same manner as that described above with reference to the converter of Figure 9.

As a general optimal control problem, the aforementioned nonlinear optimization could additionally include one or more inequality constraints in which case it could be solved by using the further method of Hamiltonian (Pontryagin's minimum principle).

One example of such an inequality constraint is:

$$C \underbrace{\begin{pmatrix} PHB\_A \\ PHB\_B \\ PHB\_C \\ SFB\_A \\ SFB\_B \\ SFB\_C \\ SFB\_A_{Filt\_Q} \\ SFB\_B_{Filt\_Q} \\ SFB\_C_{Filt\_Q} \\ PHB\_A_{Filt\_Q} \\ PHB\_B_{Filt\_Q} \\ PHB\_C_{Filt\_Q} \\ TFB_{Filt\_Q} \\ TFB \end{pmatrix}}_{x} \leq \underbrace{\begin{pmatrix} PHB\_A^{max} \\ PHB\_B^{max} \\ PHB\_C^{max} \\ SFB\_A^{max} \\ SFB\_B^{max} \\ SFB\_C^{max} \\ SFB\_A_{Filt\_Q}^{max} \\ SFB\_B_{Filt\_Q}^{max} \\ SFB\_C_{Filt\_Q}^{max} \\ PHB\_A_{Filt\_Q}^{max} \\ PHB\_B_{Filt\_Q}^{max} \\ PHB\_C_{Filt\_Q}^{max} \\ TFB_{Filt\_Q}^{max} \\ TFB^{max} \end{pmatrix}}_{d}$$

where

C is a matrix which maps possible maximum voltages range provided by the sub-converters 38,39,62; and

d is a vector representing of the maximum desired voltage in each sub-converter 38,39,62.

In either case the minimum sub-converter voltages $SFB\_A_{Filt\_Q}$, $SFB\_B_{Filt\_Q}$, $SFB\_C_{Filt\_Q}$, $PHB\_A_{Filt\_Q}$,

$PHB\_B_{Filt\_Q}$, $PHB\_C_{Filt\_}$, TFB may also be determined by solving a nonlinear optimization of the form $\max_{x} \{-J_{Voltage}\}$.

Meanwhile, the second method of the invention includes a third step of controlling each sub-converter 38,39,62 as the respective voltage source to achieve the corresponding determined sub-converter voltage.

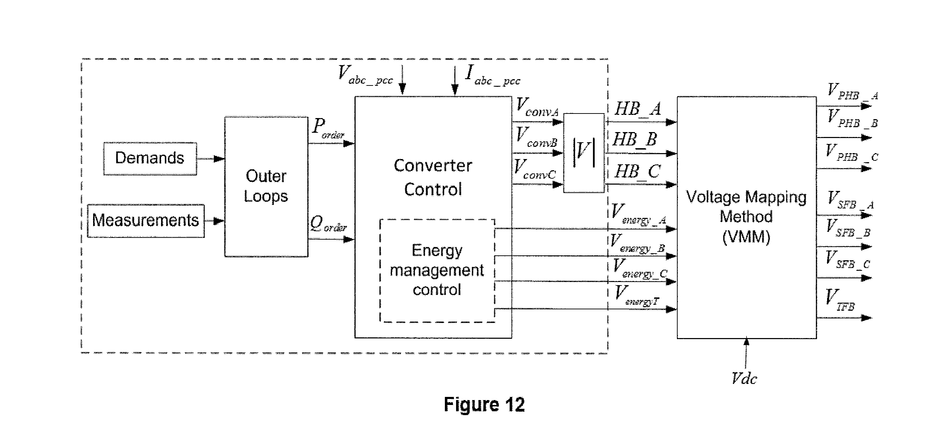

Figure 12 illustrates schematically another exemplary layout of the controller 60 which is identical to the layout shown in Figure 5, but with the addition of a second energy management voltage demand $V_{energyT}$ from the energy management control sub-block to the VMM control block and with the addition of a new output voltage signal $V_{TFB}$ from the VMM control block to the lower control loop, where the new output voltage signal $V_{TFB}$ corresponds to the required voltage contribution TFB for the third sub-converter 62.

The second method of the invention provides the flexibility to operate the first sub-converter 39 and the third sub-converter 62 to share the DC active filtering action.

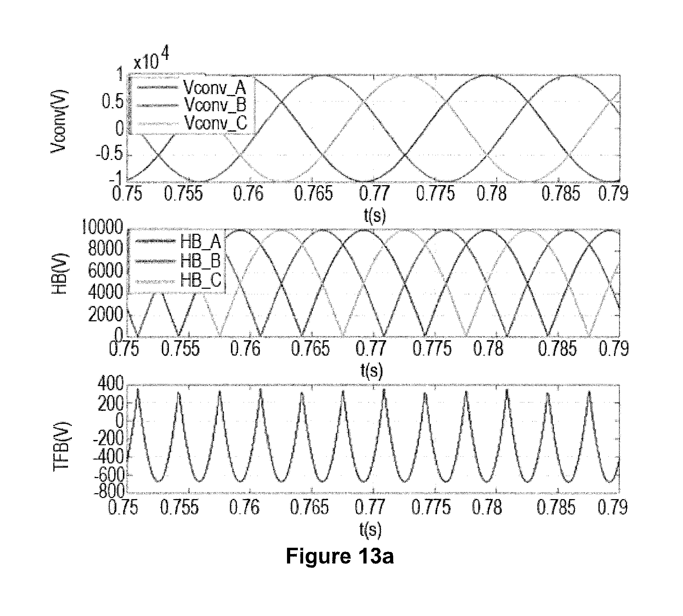

Figures 13a to 15 illustrate, in graphical form, the operation of the converter 130 when the third sub-converter 62 is operated to achieve a sub-converter voltage with a non-zero DC voltage component. In the example shown in Figures 13a to 15, $V_{energyT}$ has a zero value, which would lead to a deviation in the energy level of the third sub-converter 62.

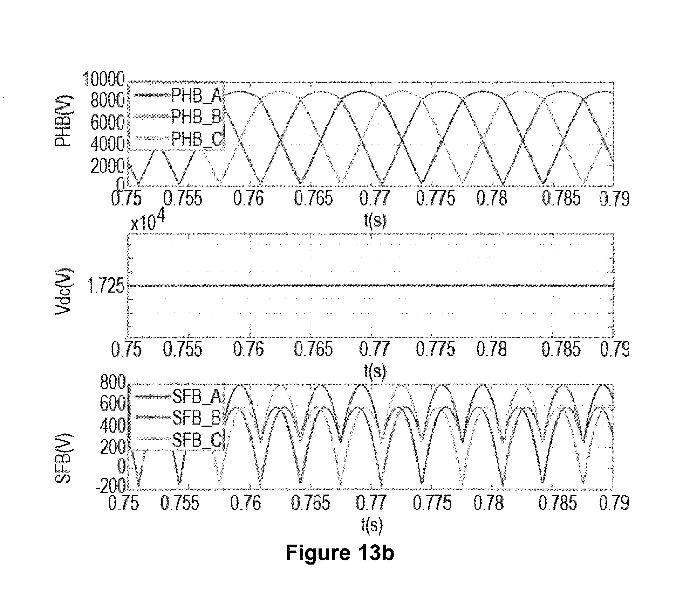

Figures 13a and 13b illustrate, in graphical form, the operation of the converter 130 under balanced operating conditions, where the real power demand is 1.0 PU and the reactive power demand is 0.4 PU. It can be seen from Figures 13a and 13b that the controller 60 is able to operate the converter 130 to maintain the desired AC and DC converter voltages required of the balanced operating conditions.

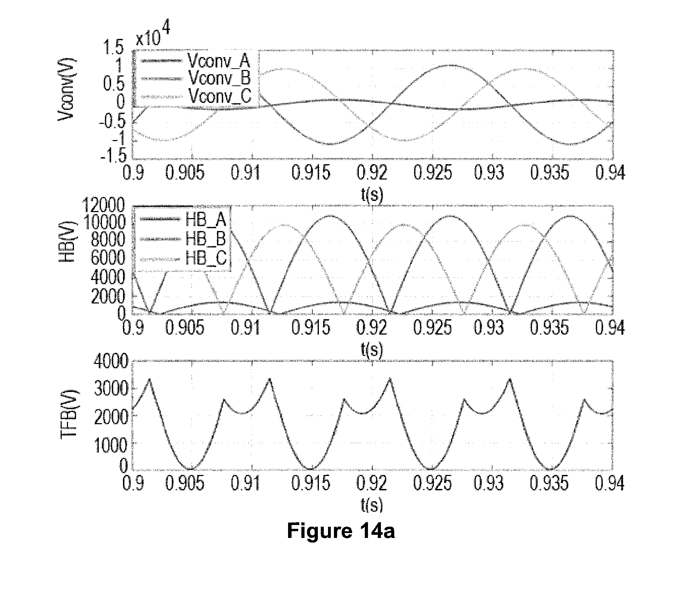

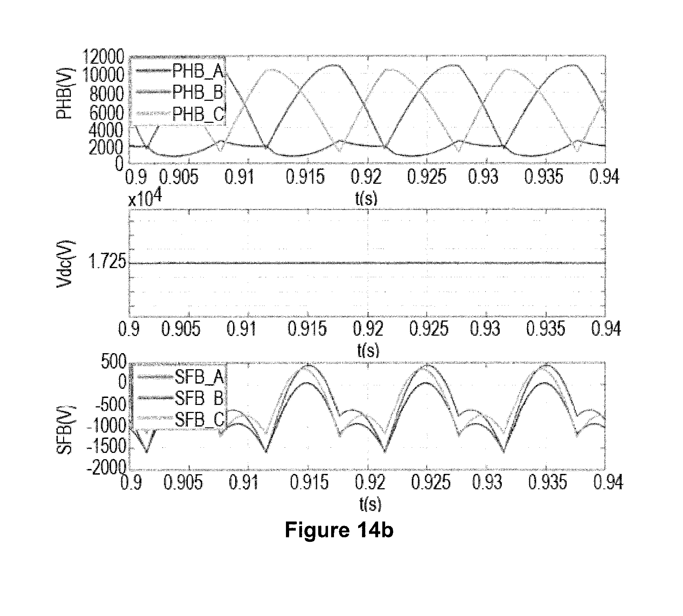

Figures 14a and 14b illustrate, in graphical form, the operation of the converter 130 under unbalanced operating conditions for the same voltage objective function $J_{Voltage}$ as Figures 13a and 13b, where one of the phases Phase_A of the AC network 50 experiences a short to ground, the real power demand is 0.5 PU and the reactive power demand is 0.4 PU. It can be seen from Figures 14a and 14b that the fault in Phase_A results in a drop in the corresponding AC phase voltage, and that the controller 60 is able to continue the operation of the converter 130 under the unbalanced operating conditions whilst maintaining the desired DC converter voltage.

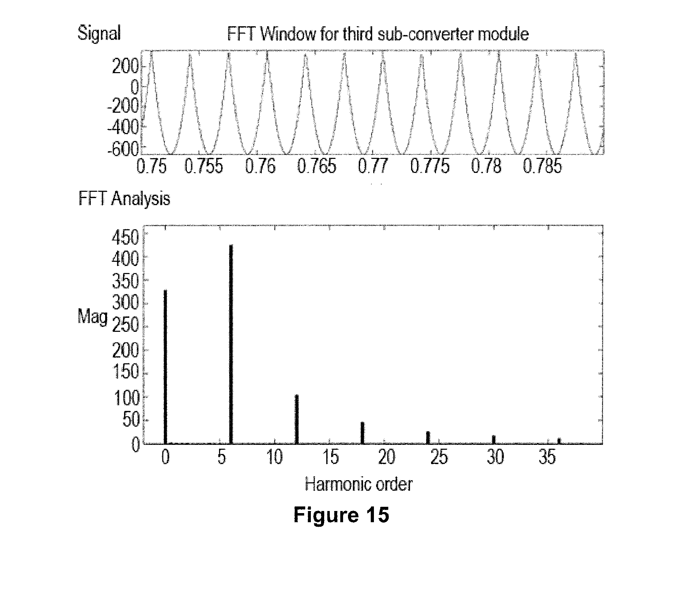

Figure 15 illustrates, in graphical form, the presence of a non-zero DC voltage component and 6th, 12th, 18th, 24th and 30th harmonic components in the sub-converter voltage of the third sub-converter 62 that is operated under the balanced operating conditions shown in Figures 13a and 13b.

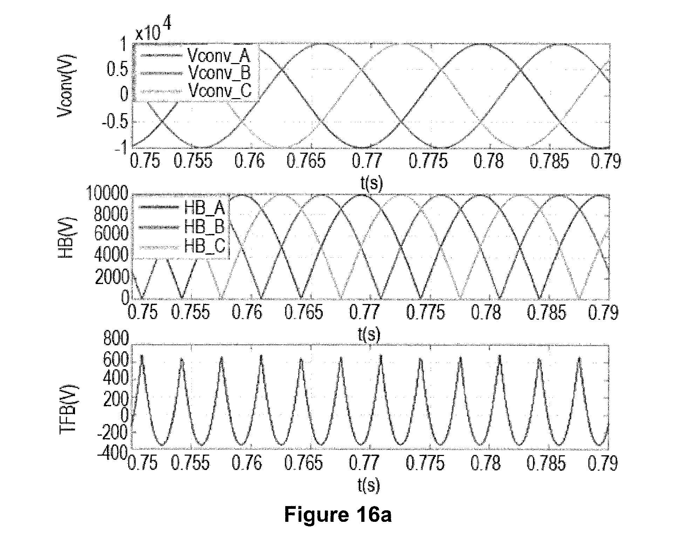

Figures 16a to 18 illustrate, in graphical form, the operation of the converter 130 when the third sub-converter 62 is operated to achieve a sub-converter voltage with a near zero DC voltage component.

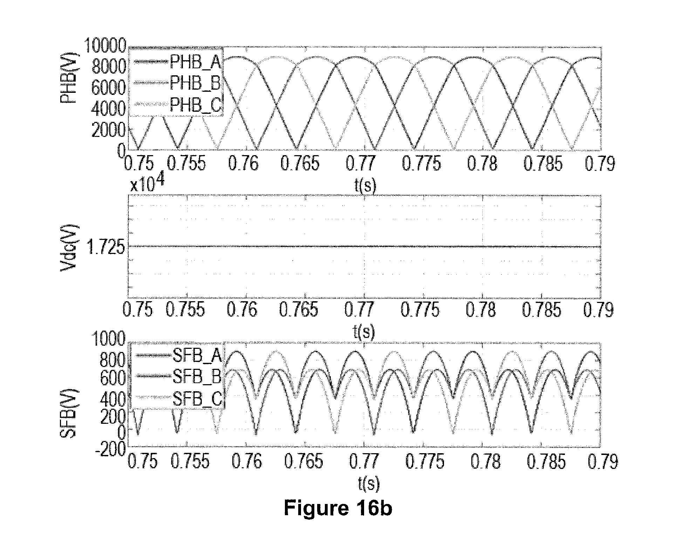

Figures 16a and 16b illustrate, in graphical form, the operation of the converter 130 under balanced operating conditions, where the real power demand is 1.0 PU and the reactive power demand is 0.4 PU. It can be seen from Figures 16a and 16b that the controller 60 is able to operate the converter 130 to maintain the desired AC and DC converter voltages required of the balanced operating conditions.

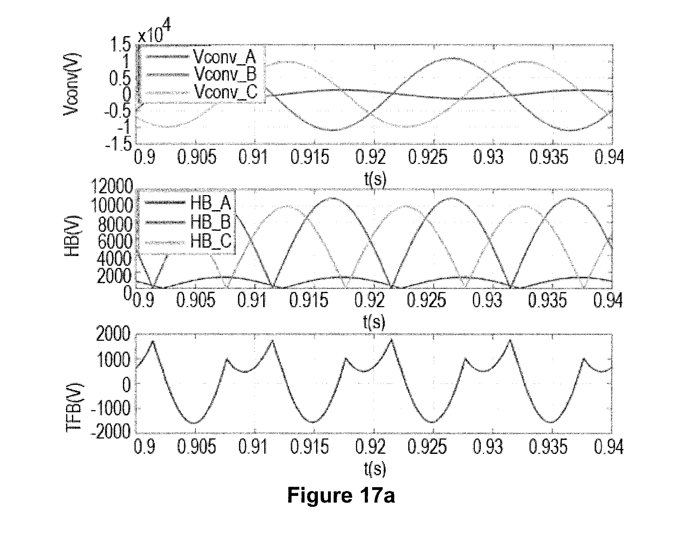

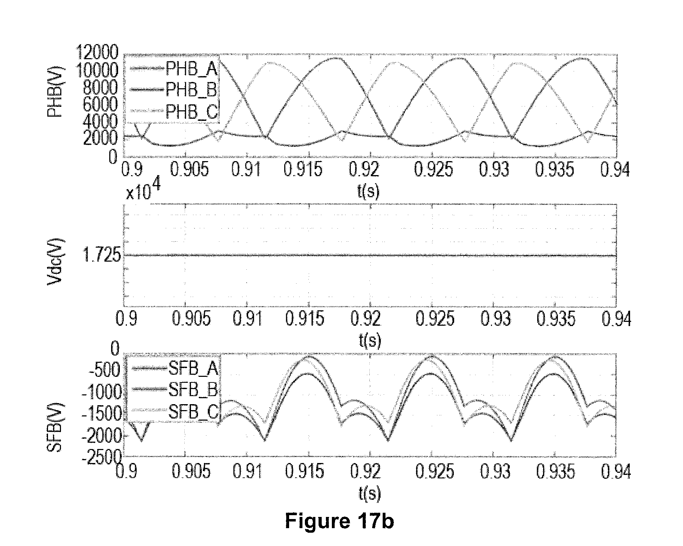

Figures 17a and 17b illustrate, in graphical form, the operation of the converter 130 under unbalanced operating conditions for the same voltage objective function $J_{Voltage}$ as Figures 16a and 16b, where one of the phases Phase_A of the AC network 50 experiences a short to ground, the real power demand is 0.5 PU and the reactive power demand is 0.4 PU. It can be seen from Figures 17a and 17b that the fault in Phase_A results in a drop in the corresponding AC phase voltage, and that the controller 60 is able to continue the operation of the converter 130 under the unbalanced operating conditions whilst maintaining the desired DC converter voltage.

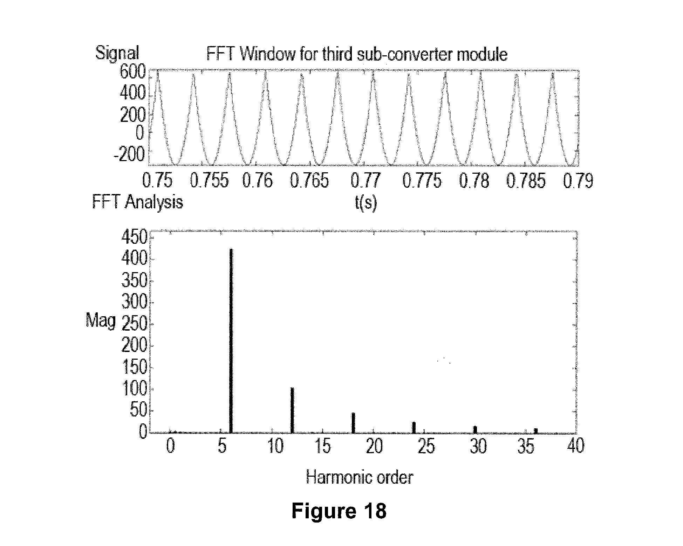

Figure 18 illustrates, in graphical form, the presence of 6th, 12th, 18th, 24th and 30th harmonic components in the sub-converter voltage of the third sub-converter 62 that is operated under the balanced operating conditions shown in Figures 16a and 16b. It can be seen from Figure 18 that the sub-converter voltage of the third sub-converter 62 is controlled to mostly omit the DC voltage component.

It is shown therefore that the operation of the converter 130 of Figure 12 using the second method allows the instantaneous calculation of the optimal sub-converter voltages to meet a number of criteria or constraints designed to maintain the operation of the converter 130 within its nominal voltage and current rating whilst meeting specified AC and DC side power quality requirements, under various normal and abnormal operating conditions.

In addition it is shown, particularly in Figures 13a to 18, that the second method provides the flexibility to operate the converter 130 in different ways for the same criteria or constraints.

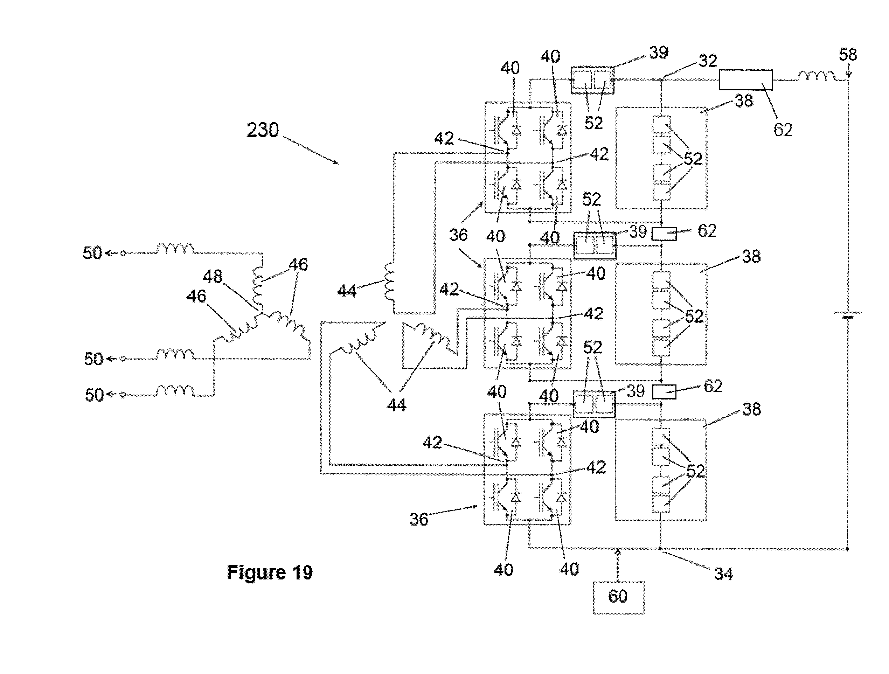

A converter according to a third embodiment of the invention is shown in Figure 19 and is designated generally by the reference numeral 230. The converter 230 of Figure 19 is similar in structure and operation to the converter 130 of Figure 9, and like features share the same reference numerals.

The converter 230 of Figure 19 differs from the converter 130 of Figure 9 in that, instead of having only one third sub-converter 62, the converter 230 of Figure 19 includes a plurality of third sub-converters 62. More specifically, each limb of the converter 230 of Figure 10 further includes a respective third sub-converter 62 connected in series with the corresponding first sub-converter 39, with the corresponding second sub-converter 38 being connected to a common connection point between the corresponding first and third sub-converters to form a "T" arrangement.

In the embodiment shown, the DC converter voltage across the first and second DC terminals 32,34 is the sum of the sub-converter voltages of the second sub-converters 38 and the third sub-converters 62.

Each third sub-converter 62 is structurally and operationally configured as a chain-link converter in the same manner as the third sub-converter 62 described above with reference to the converter 130 of Figure 9. Thus, each third sub-converter 62 is configured to be controllable to act as a third voltage source.

The controller 60 is further configured to implement a third method of controlling the converter 230.

The third method comprises a first step of obtaining a respective DC side voltage demand for the DC side voltage which the corresponding limb is required to track, and a DC converter voltage demand for the DC converter voltage across the first and second DC terminals 32,34 which the converter 230 is required to track.

The first step further includes optional sub-steps of:

- obtaining a respective first energy management voltage demand for each sub-converter 38,39 which the sub-converter 38,39 is required to track to regulate the energy level of the corresponding first sub-converter 39, as per the first control function;
- obtaining a respective first filtering voltage demand for each sub-converter 38,39 which the sub-converter 38,39 is required to track to achieve active filtering of the DC converter voltage across the first and second DC terminals 32,34, as per the second control function;
- obtaining a respective compensatory voltage demand for each first sub-converter 39 which the first sub-converter 39 is required to track to generate the compensatory DC voltage component, as per the third control function;
- obtaining a respective second filtering voltage demand for each third sub-converter 62 which the third sub-converter 62 is required to track to achieve active filtering of the DC converter voltage across the first and second DC terminals 32,34, as per the fourth control function;
- obtaining a respective second energy management voltage demand for each third sub-converter 62 which the third sub-converter 62 is required to track to regulate its energy level, as per the fourth control function.

The third method also includes a second step of determining a sub-converter voltage for each sub-converter 38,39,62 that the sub-converter 38,39,62 must contribute to track the corresponding required voltage demands.

The various demands may be obtained directly from a higher-level controller. Alternatively the various demands may be obtained directly from the controller carrying out its own calculations.

More particularly, the third method of the invention includes carrying out mathematical optimization to determine a number of optimal sub-converter voltages.

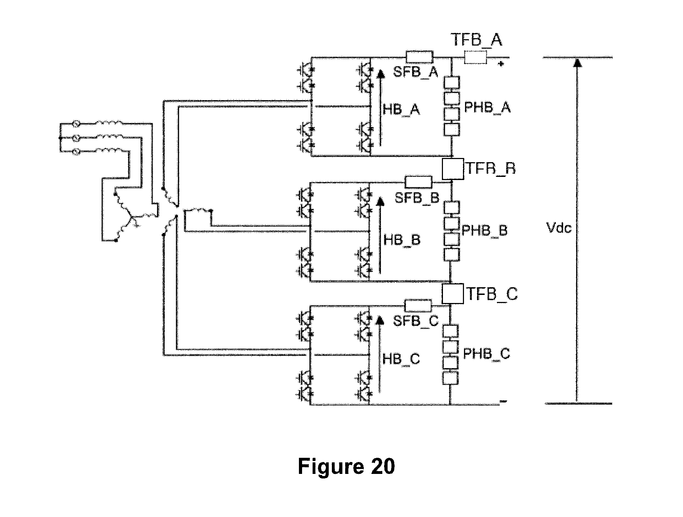

Carrying out such mathematical optimization includes creating an equivalent converter configuration which represents the voltage conditions in the converter 230, as shown in Figure 20.

In the equivalent converter configuration shown, the sub-converter voltages of the first sub-converters 39 are respectively represented by SFB_A, SFB_B and SFB_C, the sub-converter voltages of the second sub-converters 38 are respectively represented by PHB_A, PHB_B, PHB_C, and the sub-converter voltages of the third sub-converters 62 are respectively represented by TFB_A, TFB_B and TFB_C.

The equivalent converter configuration also represents the respective DC side voltage HB_A, HB_B, HB_C that each limb is required to track, e.g. match as closely as possible, and the DC converter voltage demand Vdc that the converter 230 is required to track.

Creating an equivalent converter configuration which represents the voltage conditions in the converter 230 additionally includes mapping the voltage sources.

One way in which the voltage sources may be mapped is by conducting a Kirchhoff analysis of the equivalent converter configuration to obtain the following equations:

$$HB\_A = SFB\_A_{Filt\_Q} + PHB\_A_{Filt\_Q}$$

$$HB\_B = SFB\_B_{Filt\_Q} + PHB\_B_{Filt\_Q}$$

$$HB\_C = SFB\_C_{Filt\_Q} + PHB\_C_{Filt\_Q}$$

$$SFB\_A = SFB\_A_{Filt\_Q} - V_{energy\_A}$$

$$SFB\_B = SFB\_B_{Filt\_Q} - V_{energy\_B}$$

$$SFB\_C = SFB\_C_{Filt\_Q} - V_{energy\_C}$$

$$PHB\_A = PHB\_A_{Filt\_Q} + V_{energy\_A}$$

$$PHB\_B = PHB\_B_{Filt\_Q} + V_{energy\_B}$$

$$PHB\_C = PHB\_C_{Filt\_Q} + V_{energy\_C}$$

$$TFB\_A = TFB\_A_{Filt\_Q} + V_{energyT\_A}$$

$$TFB\_B = TFB\_B_{Filt\_Q} + V_{energyT\_B}$$

$$TFB\_C = TFB\_C_{Filt\_Q} + V_{energyT\_C}$$

$$V_{dc} = PHB\_A + PHB\_B + PHB\_C + TFB\_A + TFB\_B + TFB\_C$$

$V_{energy\_A}$, $V_{energy\_B}$, $V_{energy\_C}$ are the respective voltage components of the sub-converter voltages that the first and second sub-converters 38,39 must contribute to track the corresponding required first energy management voltage demands.

$SFB\_A_{Filt\_Q}$, $SFB\_B_{Filt\_Q}$, $SFB\_C_{Filt\_Q}$ are the respective sub-converter voltages that the first sub-converters 39 need to be contribute to track the corresponding required filtering and compensatory voltage demands, in addition to enabling the corresponding limb to track the corresponding required DC side voltage demand HB_A, HB_B, HB_C and enabling the converter 230 to track the corresponding required DC converter voltage demand Vdc.

$PHB\_A_{Filt\_Q}$, $PHB\_B_{Filt\_Q}$, $PHB\_C_{Filt\_Q}$ are the respective sub-converter voltages that the second sub-converters 38 need to be contribute to track the corresponding required first filtering voltage demands, in addition to enabling the corresponding limb to track the corresponding required DC side voltage demand HB_A, HB_B, HB_C and enabling the converter 230 to track the corresponding required DC converter voltage demand Vdc.

$V_{energyT\_A}$, $V_{energyT\_B}$, $V_{energyT}$ are the third voltage components of the sub-converter voltage that the third sub-converters 62 must contribute to track the corresponding required second energy management voltage demands.

$TFB\_A_{Filt\_Q}$, $TFB\_B_{Filt\_Q}$, $TFB\_C_{Filt\_Q}$ are the sub-converter voltages that the third sub-converters 62 needs to be contribute to track the required second filtering voltage demands, in addition to enabling the converter 230 to track the corresponding required DC converter voltage demand Vdc.

The preceding equations above are then expressed in a matrix form:

$$A . x = b$$

where

$$A = \begin{pmatrix}
0 & 0 & 0 & 0 & 0 & 0 & 1 & 0 & 0 & 1 & 0 & 0 & 0 & 0 & 0 & 0 & 0 & 0 \\
0 & 0 & 0 & 0 & 0 & 0 & 0 & 1 & 0 & 0 & 1 & 0 & 0 & 0 & 0 & 0 & 0 & 0 \\
0 & 0 & 0 & 0 & 0 & 0 & 0 & 0 & 1 & 0 & 0 & 1 & 0 & 0 & 0 & 0 & 0 & 0 \\
0 & 0 & 0 & -1 & 0 & 0 & 1 & 0 & 0 & 0 & 0 & 0 & 0 & 0 & 0 & 0 & 0 & 0 \\
0 & 0 & 0 & 0 & -1 & 0 & 0 & 1 & 0 & 0 & 0 & 0 & 0 & 0 & 0 & 0 & 0 & 0 \\
0 & 0 & 0 & 0 & 0 & -1 & 0 & 0 & 1 & 0 & 0 & 0 & 0 & 0 & 0 & 0 & 0 & 0 \\
-1 & 0 & 0 & 0 & 0 & 0 & 0 & 0 & 0 & 1 & 0 & 0 & 0 & 0 & 0 & 0 & 0 & 0 \\
0 & -1 & 0 & 0 & 0 & 0 & 0 & 0 & 0 & 0 & 1 & 0 & 0 & 0 & 0 & 0 & 0 & 0 \\
0 & 0 & -1 & 0 & 0 & 0 & 0 & 0 & 0 & 0 & 0 & 1 & 0 & 0 & 0 & 0 & 0 & 0 \\
0 & 0 & 0 & 0 & 0 & 0 & 0 & 0 & 0 & 0 & 0 & 0 & 1 & 0 & 0 & -1 & 0 & 0 \\
0 & 0 & 0 & 0 & 0 & 0 & 0 & 0 & 0 & 0 & 0 & 0 & 0 & 1 & 0 & 0 & -1 & 0 \\
0 & 0 & 0 & 0 & 0 & 0 & 0 & 0 & 0 & 0 & 0 & 0 & 0 & 0 & 1 & 0 & 0 & -1 \\
1 & 1 & 1 & 0 & 0 & 0 & 0 & 0 & 0 & 0 & 0 & 0 & 0 & 0 & 0 & 1 & 1 & 1
\end{pmatrix}$$

$$x = \begin{pmatrix} x_1 & x_2 & x_3 & x_4 & x_5 & x_6 \end{pmatrix}^T$$
$$x_1 = \begin{pmatrix} PHB\_A & PHB\_B & PHB\_C \end{pmatrix}$$
$$x_2 = \begin{pmatrix} SFB\_A & SFB\_B & SFB\_C \end{pmatrix}$$
$$x_3 = \begin{pmatrix} SFB\_A_{Filt\_Q} & SFB\_B_{Filt\_Q} & SFB\_C_{Filt\_Q} \end{pmatrix}$$
$$x_4 = \begin{pmatrix} PHB\_A_{Filt\_Q} & PHB\_B_{Filt\_Q} & PHB\_C_{Filt\_Q} \end{pmatrix}$$
$$x_5 = \begin{pmatrix} TFB\_A_{Filt\_Q} & TFB\_B_{Filt\_Q} & TFB\_C_{Filt\_Q} \end{pmatrix}$$
$$x_6 = \begin{pmatrix} TFB\_A & TFB\_B & TFB\_C \end{pmatrix}$$

$$b = \begin{pmatrix} b_1 & b_2 & b_3 & b_4 & V_{dc} \end{pmatrix}^T$$
$$b_1 = \begin{pmatrix} HB\_A & HB\_B & HB\_C \end{pmatrix}$$
$$b_2 = \begin{pmatrix} V_{energy\_A} & V_{energy\_B} & V_{energy\_C} \end{pmatrix}$$
$$b_3 = \begin{pmatrix} -V_{energy\_A} & -V_{energy\_B} & -V_{energy\_C} \end{pmatrix}$$
$$b_4 = \begin{pmatrix} -V_{energyT\_A} & -V_{energyT\_B} & -V_{energyT\_C} \end{pmatrix}$$

The matrix defines the equality constraints expressed as linear equations that the third method employs to determine the optimal voltage sources to be provided through control of the sub-converters 38,39,62 as the respective voltage sources to achieve the corresponding determined sub-converter voltages.

The aforementioned mathematical optimization step may be subject to an application of a voltage weighting to the relative voltage contribution provided by each voltage source and a mathematical optimization to determine a minimum individual sub-converter voltage that each corresponding sub-converter 38,39,62 must contribute to track the corresponding required voltage demands, each of which may be carried out in the same manner as described above with reference to the converter 130 of Figure 9.

Meanwhile, the third method of the invention includes a third step of controlling each sub-converter 38,39,62 as the respective voltage source to achieve the corresponding determined sub-converter voltage.

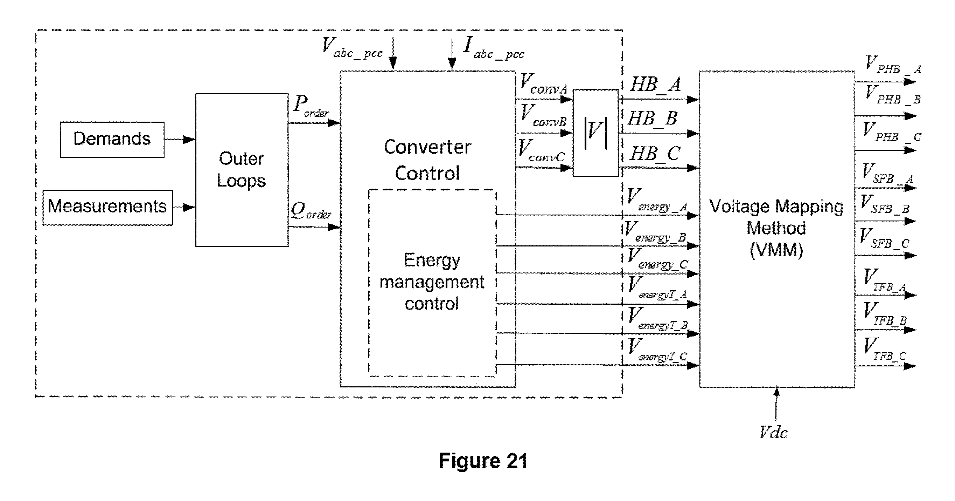

Figure 21 illustrates schematically another exemplary layout of the controller 60 which is identical to the layout shown in Figure 11, except that the second energy management voltage demand $V_{energyT}$ is replaced by a plurality of second energy management voltage demands $V_{energyT\_A}$, $V_{energyT\_A}$, $V_{energyT\_A}$ and the output voltage signal $V_{TFB}$ is replaced by a plurality of output voltage signals $V_{TFB\_A}$, $V_{TFB\_B}$, $V_{TFB\_C}$, which respectively correspond to the required voltage contributions $V_{TFB\_A}$, $V_{TFB\_B}$, $V_{TFB\_C}$ for the third sub-converters 62.

It is envisaged that, in other embodiments of the invention, the configuration of each sub-converter may vary as long as each sub-converter is capable of being controllable as a voltage source.

In the embodiments shown, the AC side 42 of each phase element 36 is connected to a respective phase of a three-phase AC network 50. It is envisaged that, in other embodiments, the number of limbs in the converter may vary with the number of phases of a multi-phase AC network, and the AC side of each phase element may be connected to a respective phase of the multi-phase phase AC network.

**Claims**

1. A method of controlling a converter comprising first and second DC terminals for connection to a DC network, the converter including at least one limb connected between the first and second DC terminals, the or each limb including:

   a phase element having a plurality of switching elements and at least one AC terminal for connection to an AC network, the plurality of switching elements being configured to be switchable to selectively interconnect a DC side voltage at a DC side of the phase element and an AC side voltage at an AC side of the phase element;
   a first sub-converter connected in series with the DC side of the phase element in an electrical block, the first sub-converter being configured to be controllable to act as a first voltage source; and
   a second sub-converter connected in parallel with the electrical block, the second sub-converter being configured to be controllable to act as a second voltage source,
   wherein the method includes the steps of:

   (a) obtaining a respective DC side voltage demand for the DC side voltage which the corresponding limb is required to track, and a DC converter voltage demand for the DC converter voltage across the first and second DC terminals which the converter is required to track;
   (b) determining a sub-converter voltage for each sub-converter that the sub-converter must contribute to track the corresponding required DC side voltage and DC converter voltage demands;
   (c) controlling each sub-converter as the respective voltage source to achieve the corresponding determined sub-converter voltage; and
   (d) carrying out mathematical optimization to determine one or more optimal sub-converter voltages.

2. A method of controlling a converter according to Claim 1 wherein the or each limb further includes a third sub-converter connected in series with the corresponding first sub-converter, the or each third sub-converter is configured to be controllable to act as a third voltage source, and the or each second sub-converter is connected to a common connection point between the corresponding first and third sub-converters to form a "T" arrangement.

3. A method of controlling a converter according to any preceding claim wherein the converter includes a plurality of limbs connected in series between the first and second DC terminals.

4. A method of controlling a converter according to Claim 2 wherein the phase element of the at least one limb includes at least one AC terminal for connection to a respective phase of a multiphase AC network, and the converter further includes at least two additional limbs connected in series with the at least one limb between the first and second DC terminals, each additional limb including:

   a phase element having a plurality of switching elements and at least one AC terminal for connection to a respective phase of the multiphase AC network, the plurality of switching elements being configured to be switchable to selectively interconnect a DC side voltage at a DC side of the phase element and an AC side voltage at an AC side of the phase element;
   a first sub-converter connected in series with the DC side of the phase element in an electrical block, the first sub-converter being configured to be controllable to act as a first voltage source; and
   a second sub-converter connected in parallel with the electrical block, the second sub-converter being configured to be controllable to act as a second voltage source,
   wherein the limbs are arranged in series so that the third sub-converter of the at least one limb is connected directly to one of the first and second DC terminals.

5. A method of controlling a converter according to any preceding claim further including the steps of: obtaining a respective first energy management voltage demand for each sub-converter which the sub-converter is required to track to regulate the energy level of the corresponding first sub-converter; and determining a sub-converter voltage for each sub-converter that the sub-converter must contribute to track the corresponding required first energy management voltage demand.

**6.** A method of controlling a converter according to any preceding claim further including the steps of: obtaining a respective first filtering voltage demand for each sub-converter which the sub-converter is required to track to achieve active filtering of the DC converter voltage across the first and second DC terminals; and determining a sub-converter voltage for each sub-converter that the sub-converter must contribute to track the corresponding required first filtering voltage demand.

**7.** A method of controlling a converter according to any preceding claim further including the steps of: obtaining a respective compensatory voltage demand for the or each first sub-converter which the first sub-converter is required to track to compensate for a change in real power and/or reactive power generated or absorbed at the AC side of the corresponding phase element; and determining a sub-converter voltage for the or each first sub-converter that the first sub-converter must contribute to track the corresponding required compensatory voltage demand.

**8.** A method of controlling a converter according to Claim 2 or any claim dependent thereon further including the steps of: obtaining a respective second filtering voltage demand for the or each third sub-converter which the third sub-converter is required to track to achieve active filtering of the DC converter voltage across the first and second DC terminals; and determining a sub-converter voltage for the or each third sub-converter that the third sub-converter must contribute to track the corresponding required second filtering voltage demand.

**9.** A method of controlling a converter according to Claim 2 or any claim dependent thereon further including the steps of: obtaining a respective second energy management voltage demand for the or each third sub-converter which the third sub-converter is required to track to regulate the energy level of the corresponding third sub-converter; and determining a sub-converter voltage for each third sub-converter that the third sub-converter must contribute to track the corresponding required second energy management voltage demand.

**10.** A method of controlling a converter according to any preceding claim wherein carrying out mathematical optimization includes creating an equivalent converter configuration which represents the voltage conditions in the converter.

**11.** A method of controlling a converter according to Claim 10 wherein creating an equivalent converter configuration which represents voltage conditions in the converter includes mapping the voltage sources for the or each limb.

**12.** A method of controlling a converter according to any preceding claim wherein carrying out mathematical optimization includes applying a voltage weighting to the relative voltage contribution provided by each voltage source.

**13.** A method of controlling a converter according to Claim 12 wherein applying a voltage weighting includes determining the or each voltage weighting according to measured operating parameters of the converter.

**14.** A method of controlling a converter according to Claim 12 or Claim 13 wherein, when controlling the converter under a particular operating condition, applying a voltage weighting includes applying a different voltage weighting to at least one voltage source such that the or each said voltage source provides a different contribution to the other voltage sources.

**15.** A method of controlling a converter according to any preceding claim including carrying out mathematical optimization to determine one or more minimum individual sub-converter voltages that the corresponding sub-converter must contribute to track the corresponding required voltage demands.

**16.** A converter comprising first and second DC terminals for connection to a DC network, the converter including at least one limb connected between the first and second DC terminals, the or each limb including:

a phase element having a plurality of switching elements and at least one AC terminal for connection to an AC network, the plurality of switching elements being configured to be switchable to selectively interconnect a DC side voltage at a DC side of the phase element and an AC side voltage at an AC side of the phase element; a first sub-converter connected in series with the DC side of the phase element in an electrical block, the first sub-converter being configured to be controllable to act as a first voltage source; and a second sub-converter connected in parallel with the electrical block, the second sub-converter being configured to be controllable to act as a second voltage source, wherein the converter further includes a controller programmed to:

(a) obtain a respective DC side voltage demand for the DC side voltage which the corresponding limb is required to track, and a DC converter voltage demand for the DC converter voltage across the first and second DC terminals which the converter is required to track;

(b) determine a sub-converter voltage for each sub-converter that the sub-converter must contribute to track the corresponding required DC side voltage and DC converter voltage demands;

(c) control each sub-converter as the respective voltage source to achieve the corresponding determined sub-converter voltage; and

(d) carry out mathematical optimization to determine one or more optimal sub-converter voltages.

**Figure 1**

**Figure 2a**

**Figure 2b**

39    SFB_A,B,C    38

Voltage
= 6^{th}+12^{th}+18^{th}+..

PHB_A,B,C

HB_A,B,C

Voltage
= DC+2^{nd}+4^{th}+8^{th}+..

36

**Figure 3**

SFB_A

HB_A    PHB_A

+

SFB_B

HB_B    PHB_B

Vdc

SFB_C

HB_C    PHB_C

−

**Figure 4**

25

**Figure 5**

**Figure 6**

**Figure 7**

**Figure 8**

Figure 9

Harmonic
Voltage = ANTIPHASE
6th + 12th + 18th + ..

Current
= DC + 2nd + 4th + 6th + ...

SFB_A        TFB

PHB_A

HB_A

Voltage =
DC + 2nd + 4th
+ 6th + 8th + 10th

Current = DC

**Figure 10**

TFB

SFB_A        +

HB_A        PHB_A

SFB_B

HB_B        PHB_B        Vdc

SFB_C

HB_C        PHB_C

−

**Figure 11**

**Figure 12**

Figure 13a

**Figure 13b**

Figure 14a

**Figure 14b**

EP 3 096 446 A1

Figure 15

37

Figure 16a

**Figure 16b**

Figure 17a

**Figure 17b**

Figure 18

**Figure 19**

**Figure 20**

**Figure 21**

Europäisches
Patentamt

European
Patent Office

Office européen
des brevets

# EUROPEAN SEARCH REPORT

Application Number

EP 15 27 5141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 858 231 A1 (ALSTOM TECHNOLOGY LTD [CH]) 8 April 2015 (2015-04-08) * figure 1 * * paragraph [0008] * * paragraph [0010] - paragraph [0013] * * paragraph [0019] * * paragraph [0023] * | 1-16 | INV. H02M7/483 |
| X | WO 2015/062975 A1 (ALSTOM TECHNOLOGY LTD [CH]) 7 May 2015 (2015-05-07) * figure 1 * * page 8, lines 26-32 * | 1-16 | |
| A | EP 1 253 706 A1 (ABB SCHWEIZ AG [CH]) 30 October 2002 (2002-10-30) * paragraph [0061] * | 12-14 | |
| A | TRAINER D R ET AL: "B4-111 A new Hybrid Voltage-Sourced Converter for HVDC Power Transmission", CIGRE SESSION 2010, CIGRE, PARIS, FR, 23 August 2010 (2010-08-23), pages 1-12, XP008134692, * paragraph [00II] * * figures 3,4 * | 1-16 | |

TECHNICAL FIELDS SEARCHED (IPC)

H02M

The present search report has been drawn up for all claims

| Place of search | Date of completion of the search | Examiner |
|---|---|---|
| The Hague | 17 November 2015 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 27 5141

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2015

| Patent document cited in search report | | Publication date | Patent family member(s) | | Publication date |
|---|---|---|---|---|---|
| EP 2858231 | A1 | 08-04-2015 | EP 2858231 A1<br>WO 2015052142 A1 | | 08-04-2015<br>16-04-2015 |
| WO 2015062975 | A1 | 07-05-2015 | GB 2519793 A<br>WO 2015062975 A1 | | 06-05-2015<br>07-05-2015 |
| EP 1253706 | A1 | 30-10-2002 | CA 2381841 A1<br>CN 1396700 A<br>EP 1253706 A1<br>US 2003026111 A1 | | 25-10-2002<br>12-02-2003<br>30-10-2002<br>06-02-2003 |

EPO FORM P0459

For more details about this annex : see Official Journal of the European Patent Office, No. 12/82